# EUROPÄISCHE PATENTSCHRIFT

(11) **EP 1 060 829 B1**
(45) Veröffentlichungstag und Bekanntmachung des Hinweises auf die Patenterteilung: **25.08.2004**
(21) Anmeldenummer: 00112415.5
(22) Anmeldetag: 09.06.2000
(51) Int. Cl.: B23Q 1/01, F16B 5/00, B23Q 1/00

(54) **Linearbewegungsführung**
Linear motion guide
Guidage linéaire

(30) Priorität: 16.06.1999 CH 112499
(43) Veröffentlichungstag der Anmeldung: 20.12.2000
(73) Patentinhaber: Schneeberger Holding AG, 4914 Roggwil (CH)
(72) Erfinder: Schneeberger, Hans-Martin, 4900 Langenthal (CH); Kellerhals, Erwin, 3122 Kehrsatz (CH)
(74) Vertreter: EGLI-EUROPEAN PATENT ATTORNEYS

(56) Entgegenhaltungen:
- EP-A- 0 474 397
- EP-A- 0 538 701
- EP-A- 0 845 604
- DE-A- 1 400 790
- DE-A- 1 939 838
- DE-A- 3 812 505
- DE-A- 19 506 580
- DE-C- 4 311 641
- DE-U- 29 719 757
- DE-U- 29 811 895
- GB-A- 2 051 916
- US-A- 2 863 185
- US-A- 2 870 881
- US-A- 4 616 951
- US-A- 5 160 233
- US-A- 5 228 783

## Beschreibung

Die Erfindung betrifft eine Linearbewegungsführung mit einer Führungsschiene und einem sich an der Führungsschiene abstützenden und entlang einer Längsbewegungsachse der Führung bewegbaren Schlitten, bei welcher die Führungsschiene zur Anordnung an einem Träger mittels zumindest einem Befestigungsmittel vorgesehen ist, wobei das Befestigungsmittel in Ausnehmungen der Schiene und des Trägers anbringbar ist.

In einer weit verbreiteten Linearbewegungsführung stützt sich ein Schlitten über in mindestens einer Umlaufeinheit angeordneten Roll- oder Wälzelemente an der Führungsschiene ab. Der Schlitten ist aufgrund einer Rotation der Wälzkörper in der Umlaufeinheit an der Schiene entlang einer Längsbewegungsachse bewegt. Die Erfindung erfasst jedoch nicht nur derartige Linearwälzlagerführungen sondern beispielsweise auch solche, bei denen sich der Schlitten über Gleit-, Fluid- oder magnetische Lagerung auf der Schiene abstützt.

Linearbewegungsführungen werden vor allem zur translatorischen, insbesondere geradlinigen, Bewegung und Führung von Maschinenteilen eingesetzt, wie dies beispielsweise bei der Bewegung der translatorischen Achsen einer Werkzeugmaschine erforderlich ist. Obwohl die Linearführungen oftmals in einer stark verschmutzten Umgebung und bei ungünstigen Bedingungen, wie beispielsweise hohen Temperaturen, eingesetzt werden, wird von ihnen eine hohe Präzision gefordert. Eine Voraussetzung für die Gewährleistung einer hohen Präzision der Bewegung der Maschinenteile ist die Sicherstellung einer grossen Steifheit der Führung. Die Führung sollte sich deshalb aufgrund von Belastungen möglichst nicht verlagern oder verformen. Ebenso sollte die Eigenfrequenz des Maschinenteils, das sich aus einem Träger und der daran befestigten Linearbewegungsführung ergibt, möglichst hoch in einem unschädlichen Bereich mit kleiner Schwingamplitude liegen. Eine weitere wesentliche Voraussetzung für eine präzise Bewegung der Maschinenteile ist, dass die Wälzelemente des Schlittens nicht verschmutzen, da dies auf den Verschleiss und die Führungsgenauigkeit einen nachteiligen Einfluss hat.

Insbesondere, um das Eindringen von Schmutz in das Innere des Wagens zu vermeiden, werden oftmals an den Stirnseiten der Schlitten Dichtungen angebracht. Diese Dichtungen gleiten an der Oberfläche und den Seitenflächen der Schiene entlang und streifen dadurch den Schmutz auf der Schiene ab, wodurch ein Eindringen von Schmutz in das Schlitteninnere verhindert werden soll.

Die Führungsschienen sind zur möglichst sicheren und steifen Befestigung an einem Träger meistens mit orthogonal zu ihrer Oberfläche verlaufenden Durchgangsbohrungen versehen, die zur Aufnahme von Befestigungselementen, wie beispielsweise Schrauben, vorgesehen sind. Bei dieser Lösung kann als nachteilig empfunden werden, dass in der Führungsschiene im Bereich der Schraubenkopfsenkungen eine Wandschwächung auftritt. Dies kann zu reduzierten Steifigkeits- und Festigkeitseigenschaften der Schiene führen. Zudem sind im Maschinen-Untergestell eine grosse Anzahl von Befestigungsgewinden anzubringen. Bei den durchgehärteten Schienen kann ausserdem die Abstandstoleranz der Durchgangsbohrungen in der Schiene problematisch sein. Ferner kann eine Oberflächenhärtung der Schiene im Bereich der Schraubenkopfsenkung zu einer Verringerung der Standzeiten von Senkwerkzeugen führen.

Da die Befestigungselemente die Durchgangsbohrungen in der Regel nicht vollständig ausfüllen, setzt sich hier oftmals Schmutz und Staub fest, der trotz der Dichtungslippen häufig in das Innere des Schlittens gelangt. Ausserdem bilden sich durch die Bohrungen an der Oberfläche Kanten aus. Werden die Dichtlippen direkt über die Kanten geführt, so kann dies zu einem zusätzlichen Verschleiss der Dichtlippen führen. Um eine derartige Verschmutzung zu vermeiden, sind bereits vielfältige Abdeckungen für die Durchgangsbohrungen bekannt geworden.

So ist es beispielsweise bekannt, in die Durchgangsbohrungen Kunststoffkappen einzudrücken, die mit der Oberfläche der Führungsschiene fluchten. Eine andere Art der Abdeckung ist aus der DE-A 38 12 505 bekannt, bei der die Führungsschiene an ihrer Oberfläche eine Längsnut aufweist, in die eine streifenförmige Platte eingesetzt ist. Schliesslich wird in der DE 43 11 641 C1 ein Abdeckband vorgeschlagen, das zwei Schenkel aufweist, die mit dem Mittelabschnitt jeweils einen Abknickwinkel einschliessen. Die beiden Schenkel sind zum federelastischen Eingriff in Hinterschneidungen an Seitenflächen der Führungsschiene vorgesehen.

Jedes dieser vorbekannten Abdeckmittel hat den Nachteil, dass Kanten oder Spalten nicht zu vermeiden sind. In den Spalten zwischen den Abdeckmittel und den Ausnehmungen kann sich Schmutz ansammeln, der - ebenso wie die Kanten der Abdeckmittel - die Dichtlippen beschädigen kann, wodurch die Lebensdauer und Funktionssicherheit der Linearbewegungsführung beeinträchtigt wird.

Es sind auch bereits Linearführungen bekannt geworden, bei denen auf der Schienenoberseite keine Abdeckmittel erforderlich sind. So ist es gebräuchlich, Schienen mit Sacklochbohrungen von unten an einen Träger zu befestigen. Dies erfordert aber eine Zugänglichkeit des jeweiligen Trägers von unten, was häufig nicht gegeben ist. Es ist ausserdem bereits bekannt, eine Schiene zu ihrer Befestigung mit horizontal verlaufenden Durchgangsbohrungen zu versehen. Diese Befestigung hat jedoch den Nachteil, dass ein asymetrischer Kraftfluss resultiert, der zu geringeren vertikalen und horizontalen Steifigkeiten führt. Da diese Befestigung eine grössere Querschnittsfläche der Schienen erfordert, steigt auch der Verbrauch an hochwertigem Schienenstahl.

Bei einer weiteren vorbekannten Linearführung ist die Führungsschiene im Bereich ihrer Grundfläche beidseits mit jeweils einem Flansch versehen. In jedem der beiden Flansche sind im üblichen Führungsschienen-Schraubenabstand Durchgangsbohrungen vorgesehen. Zwar werden hier keine Abdeckmittel benötigt. Diese Lösung hat jedoch den Nachteil, dass sogar doppelt so viele Bohrungen und Gewinde erzeugt werden müssen, als bei der üblichen Befestigunsart mit mittig im Querschnitt der Schiene angeordneten Durchgangsbohrungen. Ausserdem ist bei dieser Lösung eine nicht zufriedenstellende Steifigkeit der Führung zu befürchten.

Der Erfindung liegt deshalb die Aufgabe zugrunde, eine gattungsgemässe Linearbewegungsführung zu schaffen, bei der die befestigte Schiene eine gute Steifigkeit aufweist und Abdeckmittel im Bereich der Schienenoberseite vermieden werden können.

Diese Aufgabe wird bei einer Linearbewegungsführung der eingangs erwähnten Art dadurch gelöst, dass das zumindest eine Befestigungsmittel mit einem Befestigungselement und einem Mittel zur Erzeugung einer Formänderung des Befestigungselementes versehbar ist, wodurch unterschiedliche Querschnittsformen des Befestigungselementes erzielbar sind, dass das in die Ausnehmungen eingeführte Befestigungselement bei einer ersten Querschnittsform in Bezug auf den Träger und/oder die Führungsschiene relativ verschiebbar ist, und dass das Befestigungsmittel bei einer zweiten Querschnittsform unter Erzeugung einer Flächenpressung gegen den Träger und/oder gegen die Führungsschiene anliegt.

Die erfindungsgemässe Ausgestaltung von Linearführungen ermöglicht, dass die Schiene an ihrer Grundfläche bzw. Unterseite am Träger befestigt wird. Anders als bei den vielfach im Stand der Technik verwendeten Schienen sollten deshalb bei erfindungsgemässen Schienen an der Schienenoberseite möglichst keine Befestigungsmittel vorgesehen sein. Somit können die bisher zur Befestigung der Schiene üblichen Durchgangsbohrungen vermieden werden. Folglich sind auch die auf der Oberseite der Führungsschiene bisher oftmals vorhandenen Abdeckmittel nicht mehr erforderlich. Aufgrund dieser Massnahmen besteht keine Gefahr mehr, dass die Dichtlippen wegen der zur Befestigung der Schiene vorgesehenen Mittel beschädigt werden. Ausserdem können bei erfindungsgemässen Linearbewegungsführungen die durch Durchgangsbohrungen bedingten Schwächungen vermieden werden, wodurch die Schiene bessere Steifigkeitseigenschaften aufweist. Bei erfindungsgemässen Linearbewegungsführungen ist zudem eine Verkürzung der Montagezeit für die Befestigung der Schiene zu erwarten, da gegenüber den bisher üblichen Linearbewegungsführungen eine geringere Anzahl an Befestigungsmitteln angebracht werden müssen.

Erfindungsgemässe Linearbewegungsführungen werden mit einem Befestigungselement an einem Träger befestigt, das eine Querschnittsänderung erfährt. Aufgrund eines ersten Querschnittes des Befestigungselementes, welchen das Befestigungselement vor der Befestigung der Schiene annimmt, lässt sich das Befestigungselement in die Ausnehmung einführen und darin bewegen. Die Querschnittsänderung, d.h. eine Änderung der Grösse einer Querschnittsfläche und/oder der Form des Querschnittes des Befestigungsmittels, kann zum Verspannen des Befestigungsmittels mit der Schiene genutzt werden. Vorzugsweise wird hierdurch auch die Schiene auf den Träger aufgedrückt. Da das Befestigungsmittel vorzugsweise über die gesamte Schienenlänge die Schiene auf den Träger drückt, kann eine kontinuierliche Verspannung der Führungsschiene mit dem Maschinen-Untergestell und damit eine besonders gute Steifigkeit der Schiene erreicht werden.

In einer bevorzugten Ausführungsform kann vorgesehen sein, dass die Schiene im Bereich ihrer Grundfläche mit einer Nut versehen ist, die im wesentlichen parallel zur Längsbewegungsachse verläuft. In diese Nut kann ein Befestigungsmittel eingeführt werden, das darin formschlüssig angeordnet wird. Um das Befestigungsmittel möglichst einfach einzuführen und nachfolgend mit der Schiene formschlüssig zu verbinden, kann das Befestigungsmittel vor und/oder nach der Einführung in die Schiene bzw. Träger die Formänderung erfahren, bei der das Befestigungsmittel seine äussere Form ändert. Selbstverständlich wäre es auch möglich, bei der Schiene eine Formänderung zu erzeugen, durch die sich die Querschnittsfläche der Nut ändert. Auch hierdurch könnte eine formschlüssige Verbindung erzielt werden.

Die Querschnittsänderung kann in einer ersten Ausführungsform zweckmässigerweise durch Veränderung der Temperatur des Befestigungsmittels bewirkt werden. Eine besonders einfache Befestigung lässt sich dadurch erreichen, dass das Befestigungsmittel bei der voraussichtlich herrschenden Umgebungstemperatur der Linearbewegungsführung die formschlüssige Verbindung eingeht. Zur Einführung der Schiene ist diese folglich auf eine hiervon abweichende Temperatur erwärmt oder abgekühlt worden. Zur Demontage der Schiene vom Träger kann das Befestigungsmittel wieder erwärmt werden. Hierdurch wird die Verbindung zwischen Schiene und Befestigungsmittel einerseits und Träger und Befestigungsmittel andererseits aufgrund der Wärmeausdehnung des Befestigungsmittels wieder gelöst.

Bei einer derartigen Ausführungsform kann beispielsweise vorgesehen sein, dass die Formänderung durch Temperaturerhöhung des Befestigungsmittels erreicht wird. Das Befestigungsmittel kann hierbei funktional wie ein Zuganker ausgebildet sein, der im erwärmten Zustand in die Ausnehmung der Schiene und des Trägers eingeführt wird. Vorteilhafterweise ist das Befestigungsmittel aus einem Werkstoff mit erhöhter Wärmeausdehnung gefertigt. Es kann sich hierbei beispielsweise um einen der Cr-Ni-Stähle handeln, die in einen deutlich höheren Ausdehnungskoeffizienten als Gusseisen oder Schienenstahl, beispielsweise einen etwa doppelt so grossen Ausdehnungskoeffizienten, aufweisen. Durch eine Abkühlung des Befestigungsmittels schrumpft dieses unter anderem in einer Richtung, die im wesentlichen quer zur Längsbewegungsrichtung der Führung verlaufen kann. Hierdurch sollte sich das Befestigungsmittel an Seitenwände der Ausnehmungen der Schiene und des Trägers anlegen, was zur Verspannung des Befestigungsmittels mit der Schiene und dem Träger führt.

Eine Demontage kann vorzugsweise durch schnelle Erwärmung (innerhalb weniger Sekunden) des Zugankers vorgenommen werden. Hierdurch kann ein Wärmeabfluss in die Umgebung des Zugankers und eine Wärmeausdehnung der Schiene und des Trägers weitestgehend vermieden werden.

Bei einer anderen Möglichkeit zur Querschnittsänderung und der daraus resultierenden Verspannung wird von aussen auf das oder im Befestigungsmittel ein Druck ausgeübt. Hierzu kann das Befestigungsmittel vorzugsweise rohrförmig ausgebildet sein. Bevor das Befestigungsmittel in bzw. an der Schiene und dem Träger positioniert worden ist, kann im Inneren des Rohres ein Druck, vorzugsweise ein hydraulischer Druck, ausgeübt werden. Druck und Wandstärke des Rohres sind so aufeinander abgestimmt, dass das Rohr sich in vorbestimmter Weise plastisch, d.h. bleibend, oder vorzugsweise nur elastisch verformt. Durch die Verformung des rohrförmigen Befestigungsmittels gerät dieses dann in formschlüssigen Eingriff mit der Schiene. Hierzu kann das Rohr an seinem Umfang mit mehreren Pratzen versehen sein, die sich aufgrund der Formänderung des Rohres an die Schiene und den Träger anlegen.

Der hierbei genutzte Effekt ist analog einer Formänderung eines schlaffen Schlauches, der beim Aufblasen einen runden Querschnitt annimmt. In prinzipiell gleicher Weise verformt sich ein flachovales bzw. elliptisches Rohr bei innerem Überdruck in Richtung zu einem kreisförmigen Querschnitt. Liegt die Verformung im elastischen Bereich, dann nimmt das Rohr bei fehlendem inneren Überdruck wieder die ursprüngliche Form an. Bei einem flachovalen bzw. elliptischen Rohr ändern sich bei innerem Überdruck die Ausrichtung der am Umfang des Rohres vorgesehenen Pratzen.

Bei derartigen bevorzugten erfindungsgemässen Ausführungsformen soll die veränderliche Ausrichtung der Pratzen dahingehend genutzt werden, dass bei zunehmendem inneren Überdruck die Pratzen von jeweils einer Seitenfläche der Ausnehmungen der Schiene und des Trägers abheben und sich bei abnehmenden Druck wieder auf die jeweilige Fläche auflegen. Das Abheben kann zum Einführen bzw. Herausnehmen des Befestigungsmittels aus den Ausnehmungen bei der Montage und Demontage genutzt werden. Das Anlegen kann hingegen zum Verspannen des Befestigungsmittels mit der Schiene und dem Träger genutzt werden. Damit beim Ablassen des inneren Überdruckes eine ausreichende Vorspannung entsteht, sollte bei dieser erfindungsgemässen Ausführungsform eine verhältnismässig hohe Elastizitätsgrenze des Werkstoffes des Befestigungsmittels vorhanden sein und ein entsprechend hoher Druck im inneren des Befestigungsmittels erzeugt werden.

Ein hoher Innendruck könnte auch durch einen an einem Ende des Befestigungsmittels angeordneten einschraubbaren Kolben erzeugt werden, der auf ein Fluid einwirkt.

Erfindungsgemäss kann es auch bevorzugt sein, dass das Befestigungsmittel im Querschnitt zumindest in etwa U-förmig ausgebildet ist und dadurch zwei elastisch auslenkbare Schenkel aufweist. Die elastischen Schenkel liegen Seitenflächen der Nuten des Träger und der Schiene gegenüber. Sowohl die Seitenflächen der Schienennut als auch der Trägernut können profiliert sein. Ein hierzu kongruentes Profil an den Schenkeln kann durch eine Formänderung des Befestigungsmittels in das Profil der Nuten eingreifen. Eine hierbei entstehende Flächenpressung der Profile sollte Zugkräfte erzeugen, mit denen die Schiene und der Träger gegeneinander gedrückt und die beiden Bauteile miteinander lösbar verbunden werden.

Weitere bevorzugte Ausgestaltungen der Erfindung ergeben sich aus den abhängigen Ansprüchen.

Die Erfindung wird anhand den in den Figuren schematisch dargestellten Ausführungsbeispielen näher erläutert; es zeigen:
- Fig. 1: eine perspektivische Darstellung einer Linearbewegungsführung ohne Träger;
- Fig. 2: eine Querschnittsdarstellung entlang der Linie II - II in Fig. 1 bei der die Schiene auf einem Träger befestigt ist;
- Fig. 3: eine weitere Ausführungsform erfindungsgemässer Linearbewegungsführungen in einer Darstellung gemäss Fig. 2;
- Fig. 4: eine Ausschnittsdarstellung einer Spannpratzenleiste des in Fig. 3 gezeigten Befestigungsselements in zwei unterschiedlichen Belastungszuständen;
- Fig. 5: eine weitere Ausführungsform erfindungsgemässer Linearbewegungsführungen in einer Darstellung gemäss Fig. 2;
- Fig. 6: eine Ausschnittsdarstellung einer Spannpratzenleiste des in Fig. 5 gezeigten Befestigungselements in zwei unterschiedlichen Bestungszuständen;
- Fig. 7: eine teilweise Darstellung eines Querschnittes einer weiteren erfindungsgemässen Ausführungsform;
- Fig.8: eine teilweise Darstellung eines Querschnittes einer weiteren erfindungsgemässen Ausführungsform, bei welcher das Befestigungselement in seiner Befestigungsendlage angeordnet ist;
- Fig 9: eine Darstellung gemäss Fig. 8, in welcher das Befestigungselement in seiner Montage/Demontage-Endlage angeordnet ist;
- Fig. 10: ein zum Ausführungsbeispiel von Fig. 7 alternatives Befestigungselement.
- Fig. 11: ein weiteres erfindungsgemässes Ausführungsbeispiel in einer Querschnittsdarstellung;
- Fig.12: das Ausführungsbeispiel aus Fig. 11 in einem Querschnitt im Bereich einer Stirnseite der Schiene, wobei ein Zustand vor einer Formänderung des Befestigungselementes gezeigt ist;
- Fig. 13: ein Ende eines Befestigungselements aus Fig. 11 in einer Draufsicht, ein Endstück und ein Verschlussstück in einer Frontalansicht, sowie das Verschlussstück in einer Draufsicht;
- Fig. 14: eine perspektivische Darstellung eines Endbereichs des Befestigungselements während eines Bearbeitungsprozesses;
- Fig. 15: eine weitere Darstellung des Ausführungsbeispiels von Fig. 11;
- Fig. 16: eine Längsschnittdarstellung von Fig. 15;
- Fig. 17: eine asymmetrische Ausführungsform eines in eine Schiene und einen Träger eingesetzten Befestigungselements;
- Fig. 18: ein weiteres erfindungsgemässes Ausführungsbeispiel in einer Querschnittsdarstellung, bei dem eine Formänderung des Befestigungselementes bereits stattgefunden hat;
- Fig. 19: das Ausführungsbeispiel aus Fig. 18 in einem Querschnitt im Bereich einer Stirnseite der Schiene, wobei ein Zustand vor einer Formänderung des Befestigungselementes gezeigt ist.

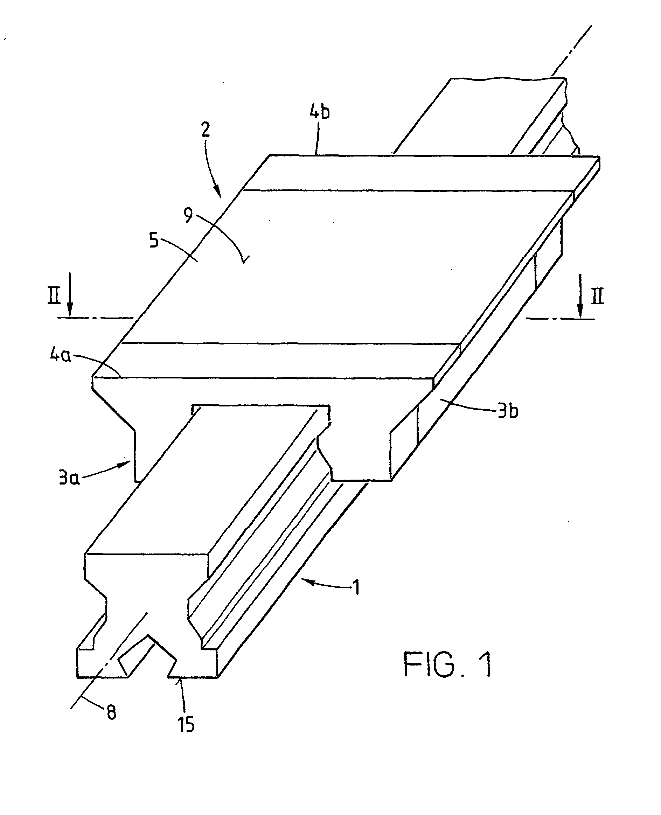

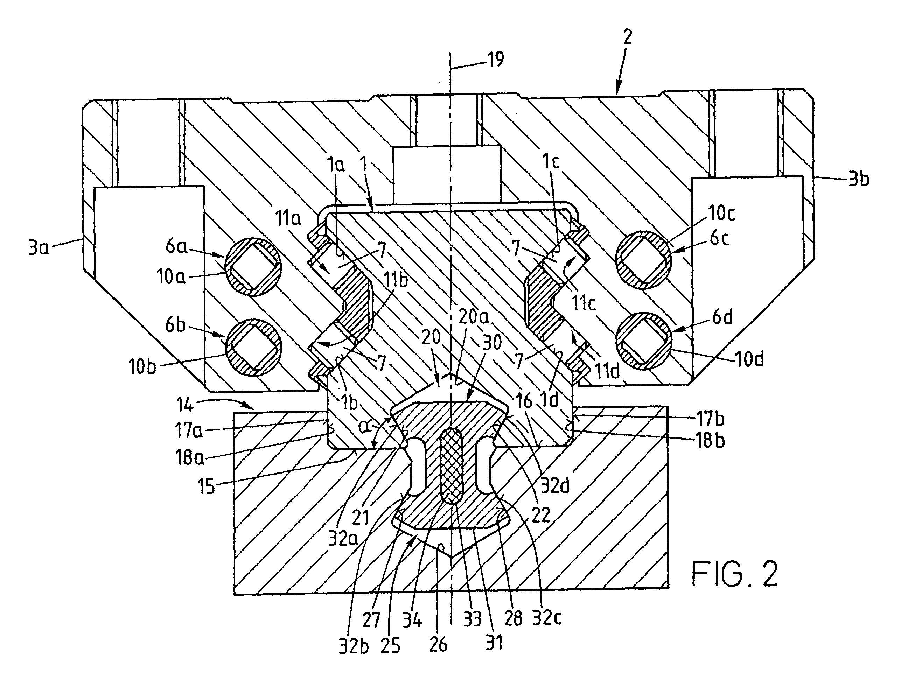

In Fig. 1 ist eine Linearbewegungsführung gezeigt, die eine profilierte Führungsschiene 1 aufweist, auf der sich ein Schlitten 2 abstützt und längsverschiebbar angeordnet ist. Wie auch Fig. 2 entnommen werden kann, ist der Schlitten 2 im Querschnitt im wesentlichen U-förmig ausgebildet und umgreift mit zwei sich an einen Mittelabschnitt anschliessenden Schenkeln 3a, 3b die Schiene 1. An den Stirnseiten des Schlittens sind Deckplatten 4a, 4b angebracht, die an einem metallischen Grundkörper 5 des Schlittens lösbar befestigt sind. Eine Oberseite des Schlittens 2 ist als Montagefläche 9 vorgesehen, auf der eine zu bewegende Last befestigt werden kann.

Der Schlitten 2 des Ausführungsbeispiels stützt sich über Wälzkörper 7, die in insgesamt vier jeweils in sich geschlossenen Umläufen 6a, 6b, 6c, 6d angeordnet sind, auf seitlichen Tragflächen 1a, 1b, 1c, 1d der Führungsschiene 1 ab. Im dargestellten Ausführungsbeispiel sind als Wälzkörper 7 Rollen vorgesehen. Zwischen den Tragflächen 1a-d der Schiene 1 und den Wälzkörpern besteht im wesentlichen eine Linienberührung.

Im metallischen Grundkörper 5 sind in jedem Schenkel zwei zylindrische Ausnehmungen 10a, 10b, 10c, 10d eingebracht, deren jeweilige Längsachse parallel zur Längsbewegungsachse 8 der Schiene 1 verläuft. Jede dieser Ausnehmungen 10a-d ist Bestandteil von einem der Wälzkörperumläufe 6a-d, die zudem jeweils eine Tragzone 11a-d und zwei jeweils die Enden der Ausnehmungen 10a-d und der Tragzone 11a-d miteinander verbindende Umlenkkanäle (nicht dargestellt) aufweisen.

In Fig. 2 ist gezeigt, dass die Schiene in einer Ausnehmung eines Trägers 14 angeordnet ist und mit ihrer Grundfläche 15 auf einer Auflagefläche 16 des Trägers aufsteht. Zur Vorpositionierung der Schiene 1 bezüglich einer Richtung im wesentlichen quer zur Längsbewegungsrichtung 8 (vgl. Fig. 1) befindet sich die Schiene 1 mit ihren Seitenflächen 17a, 17b zwischen zwei parallel zu einer Symmetrieebene 19 der Schiene 1 ausgerichteten Anlageflächen 18a, 18b des Trägers 14. Im unbefestigten Zustand kann die Schiene 1 ein geringes Spiel gegenüber den Anlageflächen 18a, 18b haben, d.h. eine Breite der Schiene 1 im Bereich der Anlageflächen 18a, 18b kann geringfügig kleiner sein als ein Abstand, den die beiden Anlageflächen zueinander haben.

Die Schiene 1 ist an ihrer Grundfläche 15 mit einer Nut 20 versehen. Die Nut 20 des Ausführungsbeispiels verläuft parallel zur Symmetrieebene 19 und zur Längsbewegungsachse 8 der Führung und weist einen in etwa schwalbenschwanzförmigen Querschnitt auf. Ein Nutgrund 20a wird von zwei zueinander geneigten Teilflächen gebildet. Seitenwände 21, 22 der Nut 20 sind zu der parallel zur Längsbewegungsachse 8 verlaufenden Symmetrieebene 19 geneigt, so dass sich die Nut 20 zur Grundfläche 15 hin konisch verjüngt.

Der Träger 14 ist ebenfalls mit einer Nut 25 versehen, die bezüglich der Ebene 19 symmetrisch ausgebildet ist. Auch ein Nutgrund 26 der Nut 25 weist zwei zueinander geneigte Teilflächen auf. Anders als die Nut 20 der Schiene 1 ist jede Seitenwand der Nut 25 des Trägers 14 ebenfalls mit zwei zueinander geneigten Teilflächen versehen. Die jeweils an den Nutgrund 26 angrenzenden Teilflächen 27, 28 sind in Richtung auf die Schiene 1 zu konisch zueinander geneigt. Die beiden an die Auflagefläche 16 des Trägers 14 angrenzenden Teilflächen laufen hingegen in Richtung auf den Nutgrund 26 hin konisch aufeinander zu.

Als Befestigungselement 30 greift eine profilierte Stange 31 sowohl in die Nut 20 der Schiene 1 als auch in die Nut 25 des Trägers 14 ein. Die entsprechend einem Zuganker verwendete Stange 31 ist sowohl bezüglich der Ebene 19 als auch einer dazu orthogonal ausgerichteten (nicht dargestellten) Ebene spiegelsymmetrisch aufgebaut. Im dargestellten Ausführungsbeispiel weist das Befestigungselement 30 vier Andruckflächen 32a, 32b, 32c, 32d auf, deren Längserstreckung im wesentlichen parallel zur Ebene 19 verläuft. Jeweils eine der Andruckflächen 32a-d liegt gegenüber einer Seitenwand 21, 22 der Nut 20 bzw. einer der Teilfläche 27, 28 der Nut 25. Die Andruckflächen 32a-d sind bezüglich ihren jeweils gegenüberliegenden Seitenwänden 21, 22 bzw. Teilflächen 27, 28 in etwa mit der gleichen Neigung versehen und verlaufen somit parallel zu diesen. Um eine sichere Anlage der Andruckflächen 32a-d zu erreichen, sind diese mit einer leichten Krümmung versehen, d.h. ballig ausgebildet, wobei die Krümmungsebene in der Zeichenebene von Fig. 2 liegt.

Das aus einer Chrom-Nickel Stahllegierung - oder einer anderen Legierung mit geeignetem Ausdehnungskoeffizienten - bestehende Befestigungselement 30 weist bezüglich seiner Querschnittsfläche eine mittige Ausnehmung 33 auf, die sich entlang der Längsbewegungsachse 8 (Fig. 1) erstreckt. In der Ausnehmung 33 ist als Formänderungselement ein elektrisches Heizelement 34 angeordnet, mit dem das Befestigungselement 30 auf Temperaturen von mehreren hundert Grad (Beispielsweise zwischen 200°C und 500°C) aufheizbar ist. Um das Befestigungselement 30 von einer Stirnseite der Schiene 1 aus in die beiden Nuten 20, 25 einzuführen, wird das Befestigungselement 30 zuvor auf einen der genannten Temperaturwerte aufgeheizt. Dadurch dehnt sich das Befestigungselement 30 vor allem im Bereich des Heizelementes 34 in eine Richtung parallel zur Ebene 19 aus. Hierdurch weisen die Andruckflächen 32a-d im unbefestigten Zustand der Schiene 1 zumindest einen geringen Abstand zu den Teilflächen 27, 28 und den Seitenwänden 21, 22 auf. Das Befestigungselement 30 lässt sich deshalb in bezug auf die Schiene 1 und dem Träger 14 in einer Richtung orthogonal zur Zeichenebene von Fig. 2 - relativ bewegen.

Nachdem das Befestigungselement 30 vollständig in die Nuten 20, 25 eingeführt ist, wird das Heizelement 34 abgeschaltet. Dadurch zieht sich das Befestigungselement wieder zusammen bzw. schrumpft, wodurch die Andruckflächen 32a-d in Anlage gegen die Seitenwände 21, 22 und die Teilflächen 27, 28 kommen. Je nach Grösse der Linearbewegungsführung und der zu erwartenden Belastungen, sollte bei der zu erwartenden Umgebungstemperatur eine Zugkraft des Befestigungselementes von einigen hundert Newton, beispielsweise ca. 400 N bis 800 N, pro Millimeter Schienenlänge, erreicht werden. Mit dieser Zugkraft wird die Schiene in einer Richtung normal zur Auflagefläche 16 auf diese gedrückt. Durch konstruktive Variationen können selbstverständlich auch hiervon abweichende Zugkräfte erreicht werden. Dadurch können aber auch unterschiedliche Zugkraftrichtungen erzielt werden, beispielsweise um ein asymmetrisches Anliegen an einer der Flächen 18a oder 18b zu bewirken.

Als Folge der vom Befestigungselement 30 auf die Seitenwände 21, 22 wirkenden Kräfte kann die Schiene 1 im Bereich ihrer Grundfläche 15 leicht gespreizt werden. Dadurch kommen auch die Seitenflächen 17a, 17b in Anlage gegen die Anlageflächen 18a, 18b des Trägers 14, wodurch mit dieser Befestigung auch eine Ausrichtung parallel zur Grundfläche des Trägers erreicht werden kann. Hierzu sollten die Wandstärken der Schiene im Bereich der Nut ausreichend dünn und die Flächen der schwalbenschwanzförmigen Nut gegenüber der Grundfläche 15 ausreichend angestellt sein, so dass mit der Befestigung auch genügend grosse Seitenkräfte erzeugbar sind. Eine von einer Seitenwand bzw. Teilfläche der Nut und der Grundfläche 15 eingeschlossener Winkel α kann deshalb von 45° und 60° betragen. Soll hingegen eine Spreizung der Schiene gerade vermieden werden, so ist der Winkel α entsprechend klein, beispielsweise von 0° bis 45° und die Wandstärke der Schiene im Bereich der Nut ausreichend gross zu wählen.

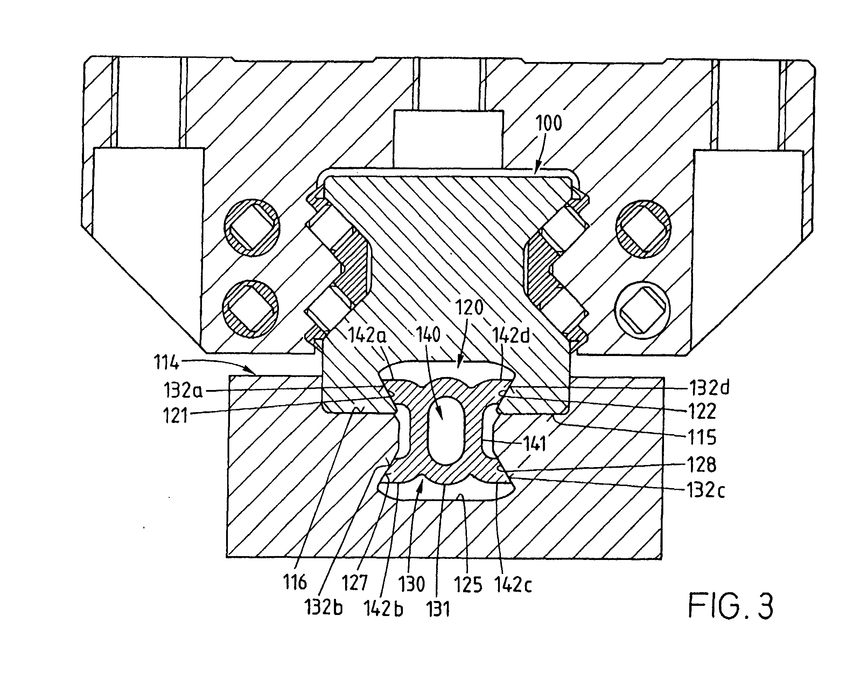

In Fig. 3 ist eine weitere mögliche erfindungsgemässe Ausführungsform gezeigt. Bis auf das Befestigungsmittel 130 ist die hier gezeigte Linearbewegungsführung im wesentlichen gleich aufgebaut wie die in Fig. 2 gezeigte Linearbewegungsführung. Im Unterschied zu dieser ist das Befestigungsmittel 130 jedoch ein als Rohr 131 ausgebildeter Zuganker, wobei das Rohr mit einem im Querschnitt in etwa ovalen Hohlraum 140 versehen ist. Ebenfalls in bezug auf den Querschnitt des Rohres 131 weist dieses an seiner äusseren Mantelfläche 141 vier gleichmässig am Umfang verteilte Spannpratzenleisten 142a, 142b, 142c, 142d auf, die jeweils mit einer Andruckfläche 132a, 132b, 132c, 132d versehen sind. Auch hier sind die Andruckflächen 132a-132d im wesentlichen parallel zu der jeweils gegenüberliegenden Seitenwand 121, 122 bzw. Teilfläche 127, 128 ausgerichtet. Bei diesem Ausführungsbeispiel sind somit das Formänderungsmittel, zu dem das Rohr 131 gehört, und das Befestigungselement, welches im wesentlichen aus den am Rohr 131 angebrachten Spannpratzenleisten 142a, 142b, 142c, 142d besteht, einstückig miteinander verbunden.

Im (nicht dargestellten) unbefestigten Zustand weisen die Andruckflächen 132a-d jedoch einen zumindest geringen Abstand zu den Flächen der beiden Nuten 120, 125 auf, wodurch sich das Befestigungsmittel 130 in den Nuten 120, 125 einführen und bewegen lässt. Um die hierzu erforderliche Querschnittsform des Befestigungselementes zu erreichen, kann zunächst das Rohr 131 an einer seiner beiden Stirnseiten in einer nicht dargestellten Weise verschlossen werden. Mit einem am anderen Ende des Rohres lösbar befestigten Kolben kann mit einem im Hohlraum des Rohres eingebrachtes hydraulische Mittel (Flüssigkeit) ein zur elastischen Verformung des Rohres ausreichend hoher Druck aufgebaut werden. Aufgrund des hohen Überdruckes im Hohlraum 140 des Rohres hat sich dieses in der Weise verformt, dass sich jede der Spannpratzenleisten 142a-d von der ihr nun jeweils gegenüberliegenden Seitenwand bzw. Teilfläche entfernt hat. In diesem Zustand - in dem die Spannpratzenleisten 142a - 142d mit Abstand zu den Flächen der beiden Nuten angeordnet werden können - wird das Rohr vollständig in die Schiene und den Träger eingeführt. Selbstverständlich ist eine Montage auch auf andere Weise möglich, beispielsweise indem zunächst das Rohr in den Träger und anschliessend die Schiene über das Rohr geschoben wird. Je nach Grösse der Führung, Material und Querschnittsform des Befestigungselementes kann der hierzu erforderliche Druck variieren.

Um die Schiene mit Hilfe des Rohres am Träger zu befestigen, wird der Überdruck abgebaut. Hierdurch verformt sich das Rohr wieder in Richtung seiner ursprünglichen Querschnittsform und nimmt vorzugsweise diese wieder vollständig ein. Jede der Spannpratzenleisten 142a-142d bewegt sich hierdurch auf die ihr jeweils gegenüberliegende Seitenwand bzw. Teilfläche zu. Sobald die Spannpratzenleisten 142a-142d in Anlage gegen die Andruckflächen der Seitenwände 121, 122 bzw. Teilflächen 127, 128 kommen, wird eine Flächenpressung erzeugt, die zur Befestigung der Schiene am Träger genutzt wird. Die hieraus resultierende Normalkraft (Zugkraft), mit welcher die Schiene 100 auf die Anlagefläche 116 des Trägers 114 gedrückt wird, sollte wiederum einige hundert Newton pro Millimeter Schienenlänge betragen. Auch hier kann das Befestigungselement bewirken, dass die Schiene 100 im Bereich ihrer Grundfläche 115 gespreizt wird und ihre Seitenflächen gegen Anlageflächen des Trägers 114 drücken.

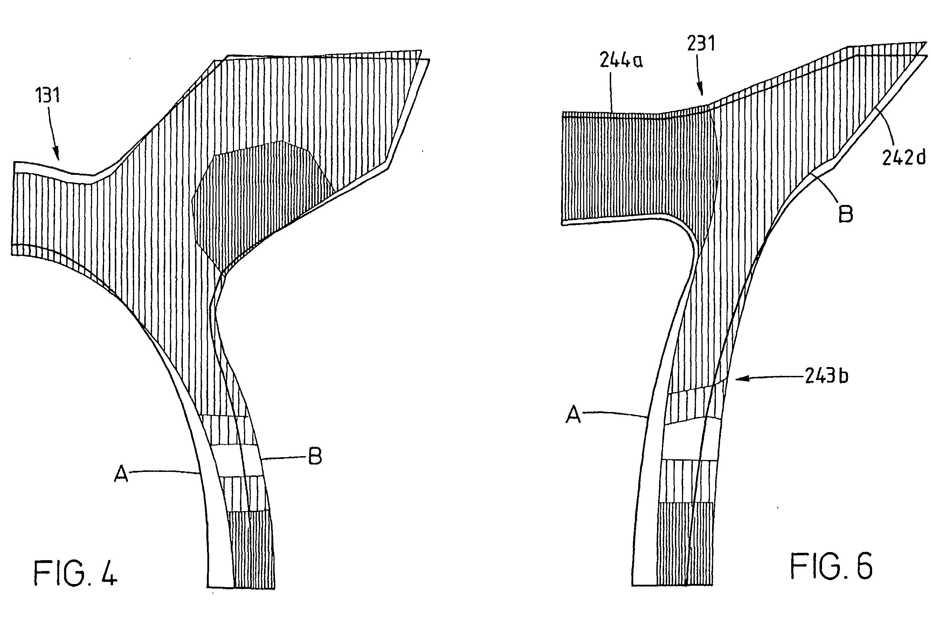

Zur Verdeutlichung der Formänderung des im Ausführungsbeispiel von Fig.3 gezeigten Befestigungselementes, ist dieses in Fig. 4 in zwei unterschiedlichen Zuständen dargestellt. Die nicht schraffiert gezeichnete Querschnittsform A nimmt das Rohr 131 im unbelasteten Zustand ein, in dem die Verspannung mit der Schiene stattfindet. Mit der Schraffur ist hingegen ein Zustand gezeigt, bei dem im Inneren des Rohres der Überdruck herrscht. Aufgrund des Überdruckes hat sich die Querschnittsform des Rohres gegenüber der in Fig. 4 gezeigten ovalen oder elliptischen Querschnittsform in Richtung einer runden Querschnittsform B verändert.

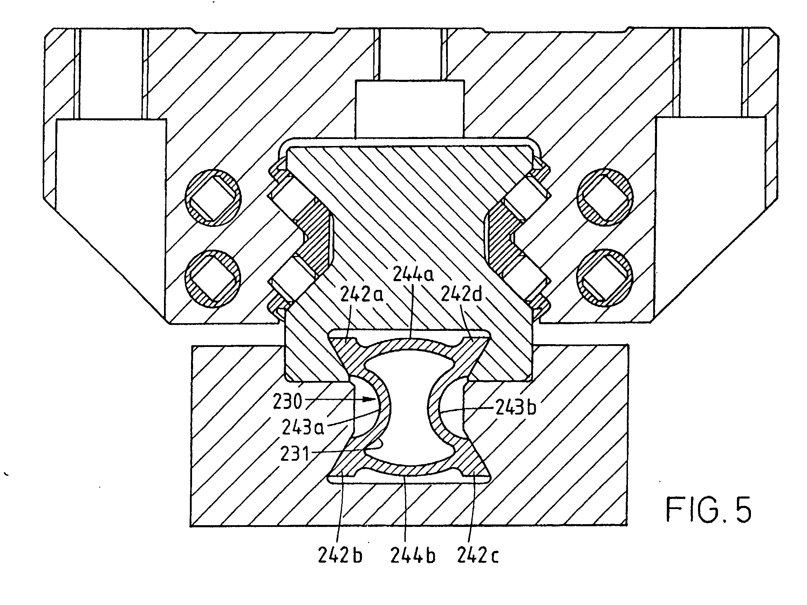

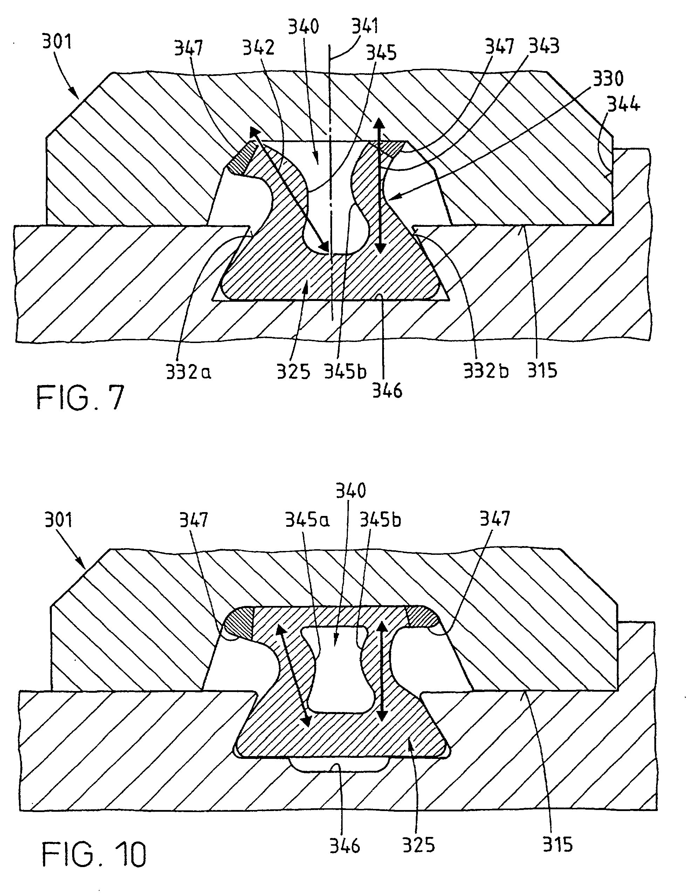

Fig. 5 zeigt eine weitere erfindungsgemässe Ausführungsform, bei dem das Befestigungsmittel 230 ebenfalls ein Rohr 231 ist, an dem wiederum vier Spannpratzenleisten 242a-d vorgesehen sind. Im Unterschied zu dem in Fig. 3 gezeigten Rohr weist dieses in Bezug auf seinen Querschnitt zwei sich gegenüberliegende konkav gekrümmte Abschnitte 243a, 243b auf. Der Detaildarstellung von Fig. 6 kann entnommen werden, dass bei genügend hohem Innendruck im Rohr sich die Stärke der Krümmung der konkaven Abschnitte 243a, 243b verkleinert (beispielsweise in Form einer Vergrösserung eines Krümmungsradius) und sich somit die beiden Abschnitte strecken. Um eine solche Deformation zu bewirken, bei der sich die Spannpratzenleisten drehen, können die obere und untere Wand 244a,b - anders als in Fig. 6 dargestellt - jeweils eine geringere Wandstärke aufweisen, als die beiden Seitenwände 243a,b. Daraus wird deutlich, dass durch eine geeignete Wahl der Wandstärken der Wandabschnitte 243a, b und 244a,b die translatorischen Bewegungen der Spannpratzenleisten beeinflusst werden können.

In Fig. 6 ist das druckbeaufschlagte Rohr mit B und das ohne Innendruck versehene Rohr mit A bezeichnet. Aufgrund dieser Formänderung bewegen sich die beiden jeweils in der gleichen Nut angeordneten Spannpratzenleistenpaare aufeinander zu, was ein Abheben der Spannpratzenleisten 242a-d von den Seitenwänden ermöglicht. Ausserdem werden die beiden zwischen den jeweiligen Spannpratzenleistenpaare 242a, 242d und 242b, 242c angeordneten Abschnitte 244a, 244b des Rohres 231 gestaucht. Das Rohr zeigt einen besonders geringen Widerstand gegen diese Stauchung, wenn die Abschnitte 244a, 244b, vorzugsweise konvex, gekrümmt sind. Aufgrund der geschilderten Formänderung nimmt die Krümmung der Abschnitte 244a, 244b zu.

In Fig. 7 ist ein weiteres Ausführungsbeispiel gezeigt. Im Unterschied zu den zuvor beschriebenen Beispielen ist hier das Befestigungselement 330 ein im wesentlichen U-förmiges Profil, das an der Führungsschiene 301 unlösbar stoffschlüssig befestigt ist. Hierzu ist das Profil im Bereich der beiden Enden seiner freien Schenkel 345a, 345b an die Schiene 301 angeschweisst. Selbstverständlich sind anstelle der Schweissverbindung 347 auch andere unlösbare Befestigungsarten, beispielsweise eine Lötverbindung, denkbar. Ebenso könnte vorgesehen sein, dass das Befestigungselement 330 und die Schiene 301 aus dem gleichen Werkstoff bestehen und einstückig sind. Diesen Ausführungsformen ist jedoch gemeinsam, dass ein Hohlraum 340 vorhanden ist, in dem ein Überdruck aufgebaut werden kann, um eine Änderung der Querschnittsform des Befestigungselementes 330 zu erzeugen.

Der Querschnittsdarstellung von Fig. 7 kann weiter entnommen werden, dass das Befestigungselement 330 an einem Nutgrund, einer im Bereich der Grundfläche 315 der Schiene 301 vorhandenen Nut, angeschweisst ist. Die Nut verläuft symmetrisch zu einer durch eine strichpunktierte Linie 341 angedeutete Symmetrieebene der Führungsschiene. Die beiden als Deformationselemente vorgesehenen asymmetrisch zueinander ausgerichteten Schenkel 345a, 345b des Befestigungselementes 330 sind konkav gekrümmt, so dass sie ihren geringsten Abstand zueinander an einer Stelle zwischen ihren freien Enden und einem Profilgrund 346 des Befestigungselementes aufweisen. Durch den Überdruck können bei diesem Ausführungsbeispiel die Schenkel 345a, 345b, insbesondere im Übergangsbereich vom Profilgrund 346 zu den Schenkel 345a, 345b, nach aussen gedrückt werden. Hierdurch werden aufgrund der Formänderung Andruckflächen 332a, 332b, die sich in etwa im Übergangsbereich befinden, steiler angestellt. Dadurch können die Andruckflächen gegenüber Seitenwänden der schwalbenschwanzförmigen Trägernut 325 mit Spiel angeordnet werden.

Durch Druckbeaufschlagung lässt sich somit das Befestigungselement 330 in die Trägernut 325 einführen. Sobald die Schiene und das Befestigungselement die vorgesehene Position einnehmen, kann von dem Befestigungselement der Druck genommen werden, wodurch sich der Abstand der Schenkel 345a, 345b zueinander wieder verringert, die Andruckflächen 332a, 332 flacher gestellt und dadurch gegen die Seitenwände der Trägernut 325 gepresst werden. Zur Demontage der Schiene vom Träger ist im Hohlraum 340 wieder ein entsprechend hoher Druck zu erzeugen, wodurch der Kontakt zwischen den Andruckflächen mit den Seitenwänden der Trägernut aufgehoben wird. Das Befestigungselement lässt sich dann durch eine Verschiebebewegung vertikal zur Zeichenebene zusammen mit der Schiene vom Träger entfernen.

Die aufgrund der Asymmetrie der beiden Schenkel von diesen auf die Schiene übertragenen Zugkräfte sind in der Darstellung von Fig. 7 durch die Pfeile 342 und 343 angedeutet. Aus diesen beiden Kräften resultiert eine gegenüber der vertikalen Symmetrieebene schräg ausgerichtete Gesamtzugkraft. Mit dieser wird die Schiene einerseits mit ihrer Grundfläche 315 auf der Auflagefläche des Trägers befestigt. Andererseits wird mit einer orthogonal zur Anschlagfläche 344 des Trägers ausgerichteten Komponente der Gesamtzugkraft, die Schiene auch gegen die orthogonal zur Grundfläche ausgerichteten Anschlagfläche 344 des Trägers gedrückt. Um dies zu erreichen, sollte der Vektor der resultierenden Gesamtzugkraft stärker geneigt sein, als der Reibungswinkel.

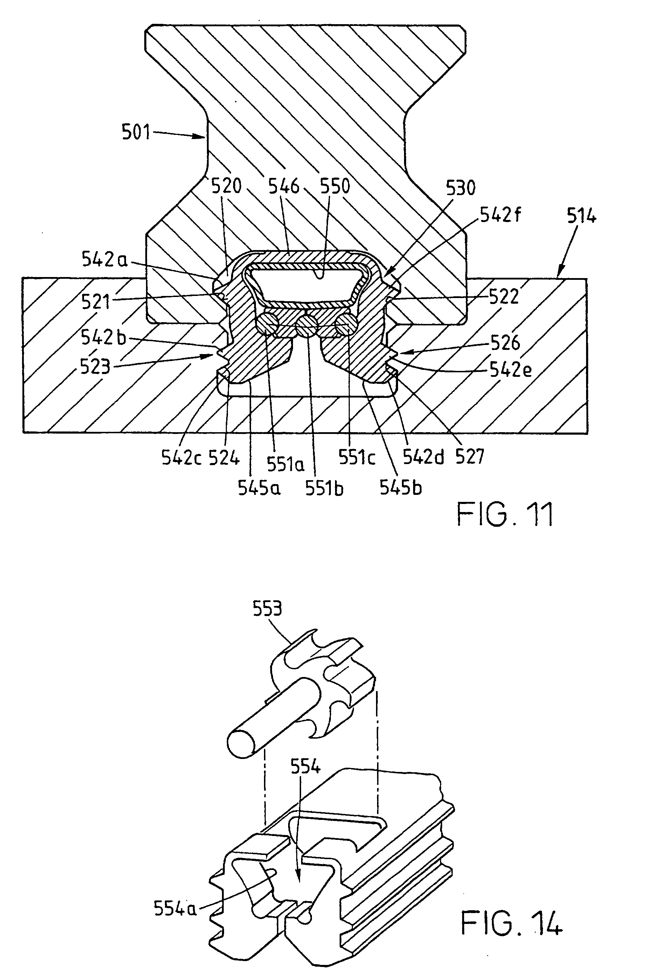

Im Zusammenhang mit unlösbar mit der Schiene verbundenen Befestigungselementen können selbstverständlich auch andere als das in Fig. 7 gezeigte U-förmige Profil verwendet werden. So könnte beispielsweise auch das in Fig. 10 dargestellte geschlossene O-Profil an die Schiene angeschweisst sein. Die Befestigung der Schiene am Träger kann jedoch in an sich gleicher Weise wie bei dem Ausführungsbeispiel von Fig. 7 vorgenommen werden. Gegenüber dem U-Profil aus Fig. 7 hat dies den Vorteil, dass die Schweissnähte bei der Druckbeaufschlagung nicht absolut dicht sein müssen.

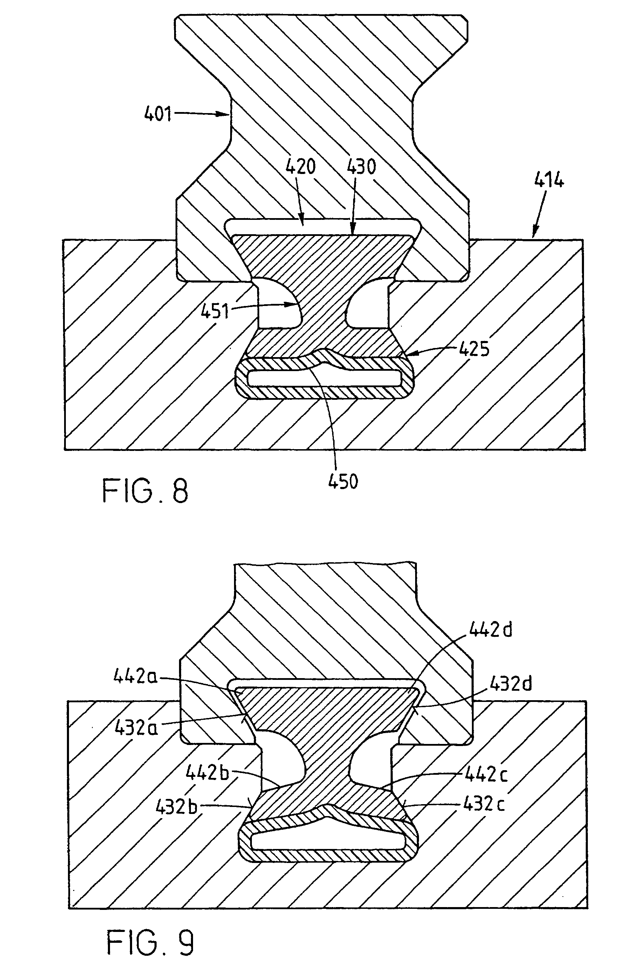

Bei dem in den Fig. 8 und 9 gezeigten Ausführungsbeispiel ist das Befestigungsmittel zweiteilig aufgebaut. Es weist als Befestigungselement 430 ebenfalls einen Zuganker auf und ist zudem mit einen darunter angeordneten Schlauch 450 versehen. Die geometrische Form des Zugankers ähnelt bis auf die nachfolgend noch erläuterten Unterschiede der geometrischen Form, der in den Fig. 2 und 3 gezeigten Befestigungselemente. Ebenso wie diese weist der Zuganker an vier jeweils paarweise vorgesehenen Spannpratzenleisten 442a-d Andruckflächen 432a-d auf, von denen jede gegenüber Seitenwänden von Nuten der Führungsschiene bzw. des Trägers angeordnet ist. Die Seitenwände der Nuten 420, 425 weisen über ihre gesamte Länge jeweils im wesentlichen die gleiche Neigung auf, wie die ihr jeweils gegenüberliegende Andruckfläche 432a-d. Auch hier sind jeweils zwei sich horizontal gegenüberliegende Andruckflächen 432a, 432d und 432b, 432c schwalbenschwanzförmig zueinander geneigt, wobei sich die durch die Andruckflächen gebildeten Schwalbenschwänze jeweils in Richtung des anderen Andruckflächenpaares 432a, 432d und 432b, 432c konisch zueinander verjüngen. Die Andruckflächen 432b, 432c der beiden im Träger 414 angeordneten Spannpratzenleisten 242b, 242c sind konvex gekrümmt und als Wälzflächen ausgebildet. Auch der Zuganker der Fig.8 und 9 ist mit einem Material versehen, das eine elastische Dehnung des Befestigungselementes zulässt.

Wie den Querschnittsdarstellungen entnommen werden kann, sind die beiden unteren Spannpratzenleisten 442b, 442c an einer Querschnittsverjüngung 451 des Zugankers angeordnet. Diese wirkt ähnlich wie ein Gelenk und lässt kleinere Schwenkbewegungen der Leisten 442b, 442c und damit auch deren Andruckflächen zu. Die Grösse der Schwenkbewegungen sollte so bemessen sein, dass zum einen aufgrund einer Schwenkbewegung der unteren Spannpratzenleisten 442b, 442c in einer Richtung weg von den oberen Spannpratzenleisten 442a, 442d die beiden oberen Andruckflächen 432a, 432b mit Abstand zu den Seitenwänden der Schienennut 420 angeordnet werden können. Diese in Fig. 9 dargestellte Lage der Leisten dient zur Montage bzw. Demontage der Schiene durch Aufschieben der letztgenannten auf den Zuganker bzw. entfernen von diesem.

Zum anderen sollte aufgrund von Schwenkbewegungen der Leisten 442b, 442c hin zu den oberen Andruckflächen 432a, 432d sämtliche Andruckflächen 432a-d auf die ihnen gegenüberliegenden Seitenwände gedrückt werden. Hierdurch wird sowohl auf die Schiene 401 als auch auf den Träger 414 eine Zugkraft ausgeübt, wodurch die Schiene auf den Träger gepresst und damit an diesem befestigt wird. Dieser Zustand, in dem der Zuganker unter einer Vorspannung gegen den Träger 414 und gegen die Schiene 401 anliegt, ist in Fig. 8 dargestellt. Bei der Bewegung der unteren Spannpratzenleisten 442b, 442c von ihrer einen zur anderen Endlage wälzen sich diese mit ihren Andruckflächen auf den im wesentlichen ebenen Seitenwänden ab.

Um die Schiene zu montieren wird zunächst der Schlauch und anschliessend der Zuganker in die Nut 425 des Trägers 414 eingeführt. Dadurch liegt der biegeschlaffe Schlauch 450 unter dem Zuganker an dessen Unterseite an den beiden unteren Spannpratzenleisten 442b, 442c an. Der Schlauch 450 ist an einer nicht dargestellten Druckmediumversorgung, beispielsweise zur Zuführung von Hydrauliköl, angeschlossen, durch welche in dem Schlauch ein Überdruck erzeugt wird. Hierdurch drückt der Schlauch gegen die Leisten 442b, 442c die wiederum die zuvor beschriebene Schwenkbewegung ausführen, bis sie die in Fig. 9 gezeigte Endlage einnehmen. Sobald die Schiene auf den Zuganker aufgeschoben ist, kann der Druck aus dem Schlauch entnommen werden. Hierdurch kommen sämtliche Spannpratzenleisten unter Erzeugung von Flächenpressungen in Anlage gegen die ihnen jeweils gegenüberliegende Seitenwand (Fig. 8).

In einem weiteren, nicht dargestellten, Ausführungsbeispiel wäre es auch möglich, den Schlauch oberhalb des Zugankers in der Nut der Schiene anzuordnen. Auch in diesem Fall sollten die Spannpratzenleisten, auf die der druckbelastete Schlauch einwirkt, aufgrund des Druckes verformbar bzw. beweglich sein.

Das in Fig.11 gezeigte weitere Ausführungsbeispiel weist ein längliches und im Querschnitt in etwa U-förmiges Befestigungselement 530 auf, das beispielsweise aus Metall bestehen kann. Zwei Schenkel 545a, 545b des zum Träger 514 hin offenen U-Profils sind durch einen Verbindungssteg 546 einstükkig miteinander verbunden. In nicht gezeigten anderen Ausführungsformen kann auch vorgesehen sein, dass der Verbindungssteg ein selbständiges Bauteil ist und durch eine geeignete Verbindung, beispielsweise Löten, Stecken, Kleben etc. mit den beiden Schenkeln verbunden wird. Eine Breite jedes Schenkels 545a, 545b des U-Profils nimmt in Richtung der freien Enden der Schenkel 545a, 545b hin zu. Zwischen den Schenkeln 545a, 545b und unmittelbar unterhalb des in etwa horizontal verlaufenden Verbindungssteges 546 des Befestigungselementes 530 ist als weiterer Bestandteil des Befestigungsmittels ein flexibel verformbarer Schlauch 550 angeordnet, der in etwa einen trapezförmigen Querschnitt aufweist. Der Schlauch 550 liegt im wesentlichen über die gesamte Länge des Befestigungselementes 530 an sich gegenüberliegenden und zueinander geneigten inneren Flächenabschnitten der Schenkel 545a, 545b sowie gegen den Verbindungssteg 546 an. Zwischen Vorsprüngen der Schenkel und dem Schlauch befinden sich als weiterer Bestandteil eines Mittels zur Erzeugung einer Formänderung des Befestigungselementes drei Stangen 551a, 551b, 551c, die kniehebelartig miteinander verbunden und betätigbar sind.

An den jeweiligen Aussenseiten der Schenkel 545a, 545b sind entlang der gesamten Länge des Befestigungselementes im Querschnitt im wesentliche dreieckförmige Spannpratzenleisten 542a, 542b, 542c, 542d, 542e, 542f vorgesehen. Hierbei ist im Bereich der Schiene 501 an jedem Schenkel jeweils eine Spannpratzeleiste 542a, 542f angeformt. Ausserdem sind im Bereich des Trägers 514 am freien Ende jedes Schenkels 545a, 545b jeweils zwei weitere Spannpratzenleisten 542b, 542c; 542d, 542e angeformt. Ähnlich wie bei den Ausführungsbeispielen gemäss Fig. 2, 3 und 5 weist auch hier die Nut 520 der Schiene 501 zwei schräge Seitenflächen 521, 522 auf, gegen die jeweils eine der beiden oberen Spannpratzenleisten 542a, 542f mit entsprechend geneigten Flächen des Befestigungselementes in Anlage bringbar ist. Seitenflächen der Nut des Trägers sind hingegen mit jeweils mehreren dreieckförmigen und horizontal verlaufenden Einkerbungen 523, 524, 526, 527 versehen, deren Profilquerschnitt ähnlich dem eines Gewindes gestaltet ist. Wenn sichergestellt wird, dass einerseits die Schenkel in ihrer Position gegenüber dem Profil der Seitenflächen verbleiben, insbesondere auch im unbelasteten Zustand, und andererseits im belasteten Zustand der Schlauch nicht aus der Schiene austritt, könnte auch auf einen Verbindungssteg 546 verzichtet werden.

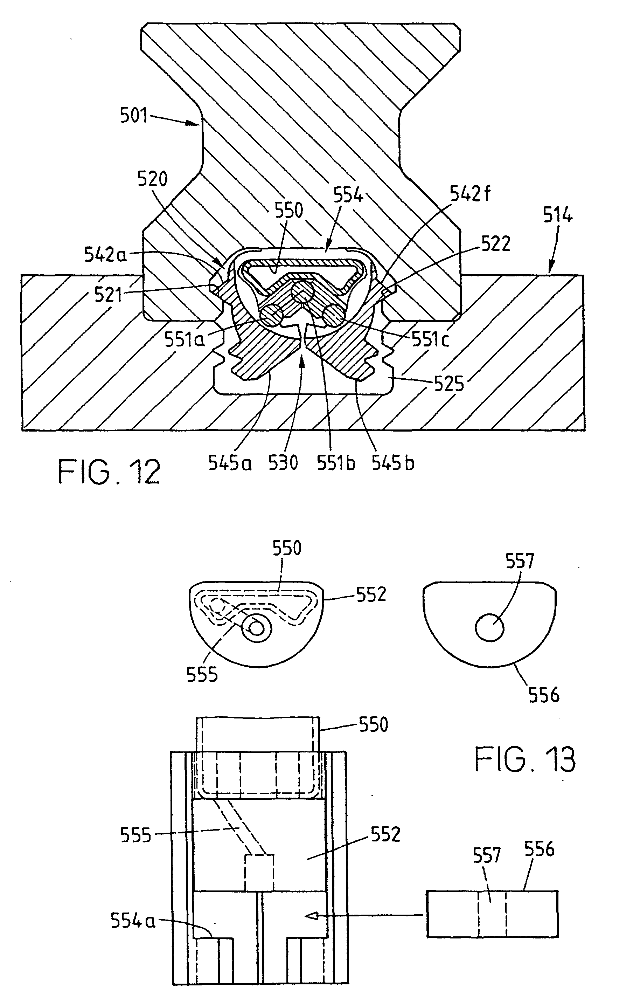

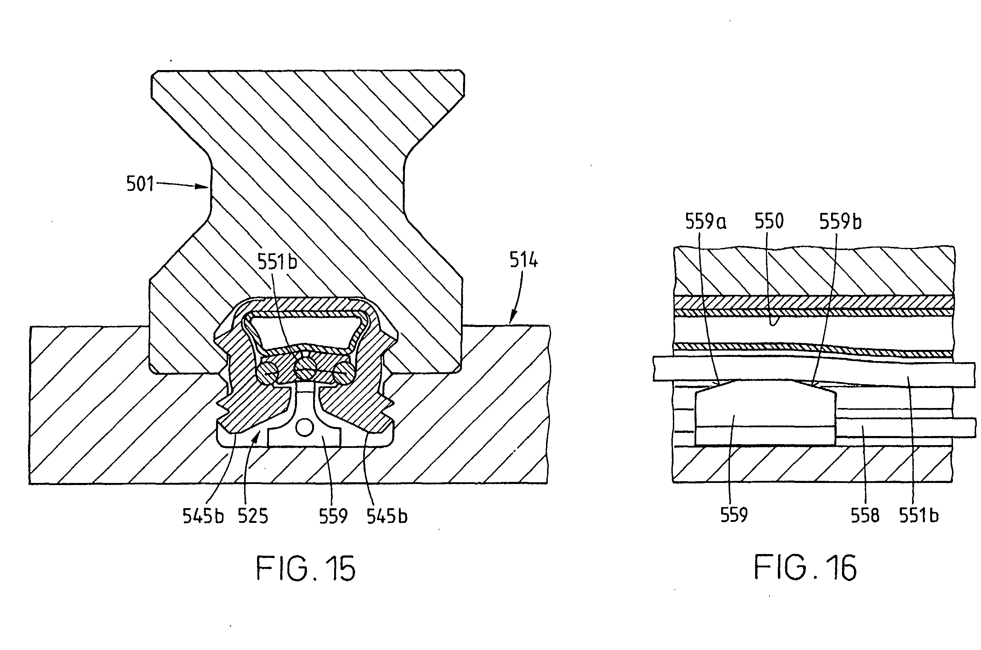

Damit sich der unter Druck stehende Schlauch 550 an den Stirnseiten der Schiene 501 nicht aus der Schiene herausdrückt, kann im Bereich einer oder beider Stirnseiten der Schiene in das Befestigungselement ein Endstück 552, beispielsweise aus Metall, eingesetzt sein (Fig. 13). Das Endstück 552 kann gegebenenfalls mit der Stirnseite des Schlauchs 550 verbunden sein. Hinter dem Endstück 552 kann zusätzlich noch ein Verschlussstück 556 in die Tasche eingesetzt sein. Im gezeigten Ausführungsbeispiel sind die Endstücke 552 und das Verschlussstück 556 im Querschnitt im wesentlichen halbkreisförmig ausgebildet. Um sie einsetzen zu können, kann beispielsweise mit einem von oben in das Befestigungselement 530 eintauchenden Scheibenfräser 553 in das Befestigungselement 530 eine Tasche 554 eingebracht werden, wie dies in Fig. 14 angedeutet ist. Das Endstück 552 kann dann zusammen mit dem Schlauch 550 von oben in die Tasche 554 eingeführt werden. Nachfolgend kann das Verschlussstück 556 hinter dem Endstück in der Tasche angeordnet werden. Bei entsprechendem Druck in dem Schlauch 530 wird das Endstück gegen das Verschlussstück und dieses wiederum gegen eine Schulter 554a der Tasche gedrückt. Anschlüsse 555, 557, durch die das Druckmedium in den Schlauch 550 eingelassen werden kann, können durch das Endstück 552 und das Verschlussstück 556 hindurchgeführt sein (Fig. 13).

Wie insbesondere in Fig. 12 zu erkennen ist, weist das Befestigungselement 530 im unbelasteten Zustand eine Breite auf, die kleiner ist als eine Breite der Nut 525 des Trägers 514. Dadurch ist es möglich, das Befestigungselement 530 in der Nut 520 der Schiene 501 vorzumontieren und anschliessend das Befestigungselement 530 von oben vertikal nach unten in Richtung des Trägers 514 in die Nut 525 des Trägers einzusetzen. Um das Befestigungselement 530 auf diese Weise vorzumontieren, kann es an einer Stirnseite der Schiene 501 in deren Nut 520 eingeschoben werden, so dass das Befestigungselement mit seinen oberen Spannpratzenleisten 542a, 542f an den geneigten Seitenflächen 521, 522 der Schienennut 520 aufliegt.

Sobald die Schiene 501 auf dem Träger 514 aufsteht, kann der Schlauch 550 aufgeblasen werden, beispielsweise indem in den Schlauch ein flüssiges oder pastöses Druckmedium mit einem Druck in der Grössenordnung von ca. 100 bar eingeführt wird. Der sich hierdurch ausdehnende Schlauch drückt von oben gegen die obere mittlere Stange 551b und gegen zwei Verbindungsglieder zu den beiden äusseren Stangen 551a, 551c des Kniehebelsystems und drückt diese nach unten. Um das Kniehebelsystem in einer vordefinierten Lage anordnen zu können, auch wenn nachträglich der Schlauch wieder entlastet wird, sollte die mittlere Stange 551b gegenüber den beiden äusseren Stangen 551a, 551c über eine Totpunktlage hinaus nach unten gedrückt werden, wie dies in Fig. 11 gezeigt ist.

Bei diesem Vorgang werden die beiden äusseren Stangen 551a, 551c nach aussen gegen die Schenkel 545a, 545b gedrückt, wodurch letztere gespreizt werden. Die Schenkel 545a, 545b kommen dadurch in Anlage gegen beide Seitenwände der Nut 525 des Trägers und greifen dort mit ihren Spannpratzenleisten 542b, 542c, 542d, 542e im wesentlichen formschlüssig in die Einkerbungen ein. Da die Spannpratzenleisten vom ersten Kontakt mit den Einkerbungen bis zu ihrer Endposition auf den in Richtung der jeweiligen Seitenwand der Nut 525 nach unten geneigten Flächen der Einkerbungen 523, 524, 526, 527 entlanggleiten, entsteht durch das Befestigungselement 530 eine Zugkraft, mit der die Schiene 501 auf den Träger 514 gedrückt und auf letzterem mit der gewünschten Vorspannkraft gehalten wird. Die resultierende Zugkraft entspricht hierbei im wesentlichen der Summe der Vertikal-Komponenten der auf die geneigten Flächen der Einkerbungen normal wirkenden Klemmkräfte. In Längsbewegungsrichtung des (nicht dargestellten) Wagens auf der Schiene wird die Schiene im wesentlichen durch einen Reibschluss in ihrer Position auf dem Träger gehalten.

Das Spreizen des Kniehebelsystems kann auch auf andere Weise als durch die Ausdehnung eines Schlauches erfolgen. So wäre es beispielsweise grundsätzlich auch möglich, oberhalb des Kniehebelsystems durch das Befestigungselement einen Keil durchzuziehen, mit welchem die obere Stange nach unten gedrückt wird. Sowohl bei diesem mechanischen Spreizen des Befestigungselementes als auch bei dem Spreizen mittels einer Ausdehnung eines Schlauches kann die Verbindung beispielsweise dadurch gelöst werden, dass der in den Fig. 15 und 16 gezeigte, an einer Zugstange 558 befestigte Keil 559 unterhalb der mittleren Stange 551b durch die Nut 525 des Trägers durchgezogen wird. Aufgrund von rampenartigen Flächen 559a, 559b im Bereich der Stirnseiten des Keils 559 ist dieser in die Nut des Trägers unter die mittlere Stange 551b einführbar und gegen diese in Anlage bringbar. Durch das nachfolgende Durchziehen des Keils 559 durch die Nut kann die mittlere Stange 551b, wie in den Fig. 15 und 16 gezeigt, entlang ihrer gesamten Länge über die Totpunktlage zurück gedrückt werden, wodurch sich die elastischen Schenkel wieder in ihre ) Ausgangsposition gemäss Fig. 12 zurückbewegen. Die Schiene kann nun zusammen mit dem Befestigungselement vom Träger senkrecht nach oben oder in Längsrichtung abgenommen werden.

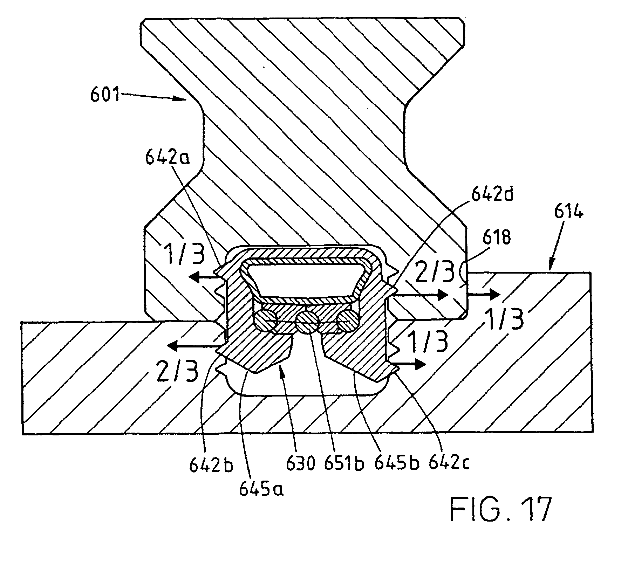

In Fig. 17 ist nun noch ein weiteres erfindungsgemässes Ausführungsbeispiel gezeigt, das dem in den Fig. 11 bis 16 gezeigten Ausführungsbeispiel sehr ähnlich ist, weshalb nachfolgend nur auf die Unterschiede eingegangen wird. Anders als das zuvor erörterte symmetrisch aufgebaute Befestigungselement 530 ist dieses Befestigungselement 630 asymmetrisch ausgebildet, um zusätzlich zu einer Zugkraft, mit der Schiene 601 auf den Träger 614 gedrückt wird, auch eine hierzu orthogonal ausgerichtete resultierende Kraft zu erzielen. Mit der resultierenden Kraft kann die Schiene gegen eine vertikale Anlagefläche 618 des Trägers 614 gedrückt werden. Die Asymmetrie entsteht zum einen dadurch, dass ein Schenkel 645a kürzer ist als der andere Schenkel 645b und dadurch die beiden unteren Spannpratzenleisten 642b, 642c der beiden Schenkel in vertikaler Richtung versetzt sind. Zum anderen sind in gleicher Weise die beiden oberen, mit der Schiene in 0 Wirkverbindung stehenden, Spannpratzenleisten 642a, 642d versetzt. Ausserdem hat in Bezug auf das Kniehebelsystem auf der linken Seite die obere Spannpratzenleiste 642a und auf der rechten Seite der Darstellung von Fig. 17 die untere Spannpratzenleiste 642c einen grösseren Abstand zur mittleren Stange 651b. Aufgrund der unterschiedlichen Höhen der beidseits der Ebene wirkenden Spannpratzenleisten und den daraus resultierenden unterschiedlichen Hebelverhältnissen entstehen in horizontaler Richtung unterschiedliche grosse Kraftkomponenten. Eine Resultierende dieser horizontalen Kraftkomponenten bewirkt, dass die Schiene in vordefinierter Weise gegen eine vertikale Anlagefläche des Trägers gedrückt wird. Durch geeignete Wahl der Hebelverhältnisse kann beispielsweise erreicht werden, dass ca. ein Drittel der auf der Seite der Anlagefläche wirkenden Horizontalkraft als Resultierende verbleibt, wie dies in Fig. 17 angedeutet ist.

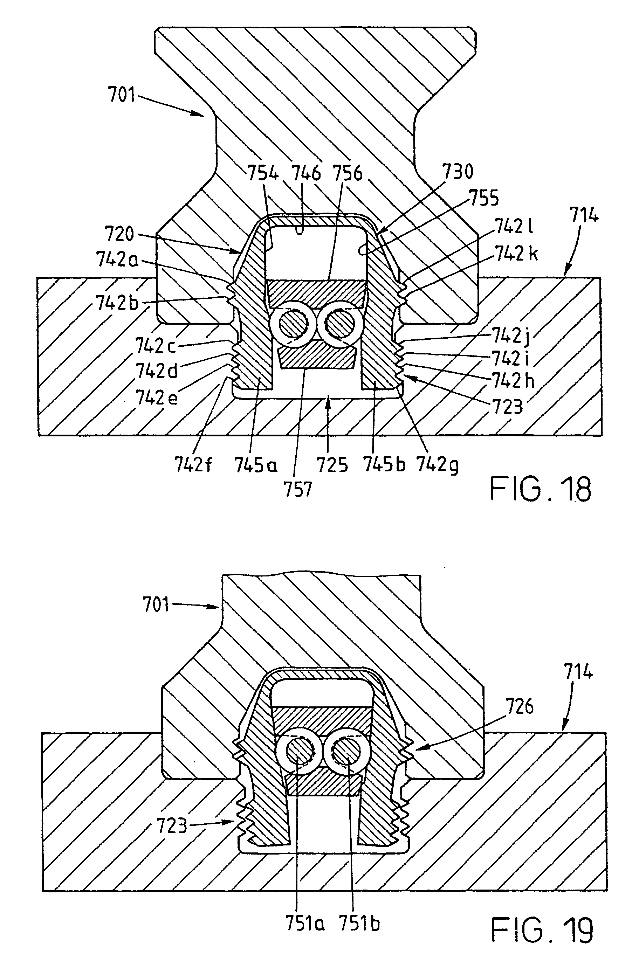

Auch das in den Fig. 18 und 19 gezeigte weitere erfindungsgemässe Ausführungsbeispiel weist ein im Querschnitt nach unten offenes, im wesentlichen U-förmiges und symmetrisches Befestigungselement 730 auf, dessen Länge im wesentlichen der Länge der Schiene 701 entspricht. Auch dieses Befestigungselement ist an den Aussenflächen der Schenkel 745a, 745b mit dreieckförmigen Spannpratzenleisten 742a - 742b versehen, von denen auf jeder Seite des Befestigungselementes jeweils mehrere sowohl in die Schiene als auch in den Träger eingreifen. Hierzu sind Seitenflächen der Nuten 720, 725 der Schiene und des Trägers mit entsprechend profilierten Einkerbungen 723, 726 versehen. Um bei diesem Befestigungselement 730 eine Formänderung zu bewirken, mit der eine Verbindung zur Schiene 701 und zum Träger 714 geschaffen werden kann, befindet sich zwischen den Schenkeln 745a, 745b wiederum ein hierfür vorgesehenes Betätigungsmittel. Dieses weist zwei im Querschnitt kreisförmige Stangen 751a, 751b auf, die über die gesamte Schienenlänge gegeneinander anliegen. Ausserdem liegen die Stangen gegen - in Richtung auf den Nutgrund des Trägers trichterförmig zueinander geneigten - innere Flächen 754, 755 der Schenkel 745a, 745b an. Sowohl über als auch unter den beiden Stangen 751a, 751b ist jeweils eine obere und eine untere Leiste 756, 757 vorhanden, die über mehrere Stege einstückig miteinander verbunden sind. Die in der Darstellung der Fig. 18 und 19 nicht erkennbaren Stege befinden sich zwischen den beiden Stangen und rasten jeweils in Ringnuten der Stangen ein.

Auch bei diesem Ausführungsbeispiel kann das bereits in der Schiene angeordnete und unbelastete Befestigungselement von oben in die Nut des Trägers eingesetzt werden. Dieser Zustand ist in Fig. 19 gezeigt. Um eine Formänderung des Befestigungsmittels zu erreichen, kann nun vorgesehen sein, dass zwischen dem Verbindungssteg 746 des U-Profils der beiden Schenkel 745a, 745b und der oberen Leiste 756 in Längsrichtung der Schiene ein nicht gezeigter Keil durchgezogen wird. Hierdurch rollen die beiden gegeneinander anliegenden Stangen auf den Innenflächen 754, 755 der elastisch auslenkbaren Schenkel ab und drücken diese nach aussen. Wie bei den Ausführungsbeispielen gemäss den Fig. 11 bis 16 greifen dadurch die Spannpratzenleisten 742a - 742l in die Einkerbungen 723, 726 ein und drücken mit zunehmender Eingriffstiefe die Schiene immer stärker gegen den Träger. Um eine definierte Raststellung vorzugeben und die Stangen hierin sicher halten zu können, kann vorgesehen sein, dass die Innenflächen 754, 755 im Bereich der Rastposition der Stangen jeweils mit einer Mulde versehen sind. Bei Erreichen ihrer Rastposition rollen die Stangen von selbst in die Mulden hinein, verbleiben dort und verhindern dadurch ein ungewolltes Lösen der Verbindung. Um die Klemmverbindung zu lösen, kann zwischen dem Nutgrund des Trägers 714 und der unteren Leiste 757 ein Keil durchgezogen werden, durch den die Stangen 751a, 751b aus den Mulden gedrückt und in Richtung des Verbindungssteges 746 bewegt werden. Die Schenkel 751a, 751b werden hierdurch wieder entlastet und bewegen sich in die in Fig. 19 gezeigte Ausgangsposition zurück. Die Schiene kann nun zusammen mit dem Befestigungselement vom Träger abgenommen werden. Alternativ zu den genannten Keilen könnten auch andere geeignete Mittel verwendet werden, beispielsweise Rollen.

## Patentansprüche

1. Linearbewegungsführung mit einer Führungsschiene (1, 100, 301, 401, 501, 601, 701) und einem sich an der Führungsschiene abstützenden und entlang einer Längsbewegungsachse (8) der Führung bewegbaren Schlitten (2), bei welcher die Führungsschiene zur Anordnung an einem Trager (14, 114, 414, 514, 614, 714) mittels zumindest einem Befestigungsmittel (130, 230) vorgesehen ist, wobei das Befestigungsmittel in Ausnehmungen der Schiene (1, 100, 301, 401, 501, 601, 701) und des Tragers anbringbar ist, **dadurch gekennzeichnet, dass** das zumindest eine Befestigungsmittel (130, 230) mit einem Befestigungselement (30, 330, 340) und einem Mittel zur Erzeugung einer Formänderung des Befestigungselementes (30, 330, 430, 530, 630, 730) versehen ist, wodurch unterschiedliche Querschnittsformen des Befestigungselementes (30, 330, 430, 530, 630, 730) erzielbar sind, dass das in die Ausnehmungen eingeführte Befestigungselement bei einer ersten Querschnittsform in Bezug auf den Träger (14, 114, 414, 514, 614, 714) und/oder die Führungsschiene (1, 100, 301, 401, 501, 601, 701) relativ verschiebbar ist, und dass zur Erzeugung einer Verbindung zwischen der Schiene und dem Träger das Befestigungselement bei einer zweiten Querschnittsform gegen den Träger und/oder gegen die Führungsschiene anliegt.

2. Linearbewegungsführung nach Anspruch 1, **dadurch gekennzeichnet, dass** die Verbindung aufgrund einer Flächenpressung einerseits zwischen dem Befestigungselement (30, 330, 430, 530, 630, 730) und dem Träger (14, 114, 414, 514, 614, 714) und/oder andererseits dem Befestigungselement und der Schiene (1, 100, 301, 401, 501, 601, 701) zustande kommt.

3. Linearbewegungsführung nach einem oder beiden der vorhergehenden Ansprüche 1 und 2, **dadurch gekennzeichnet, dass** die Formänderung im wesentlichen reversibel ist.

4. Linearbewegungsführung nach einem oder mehreren der vorhergehenden Ansprüche, **dadurch gekennzeichnet, dass** das Befestigungsmittel eine Längserstreckung hat, welche im wesentlichen parallel zur Längsbewegungsachse der Führungsschiene (1, 100, 301, 401, 501, 601, 701) verläuft.

5. Linearbewegungsführung nach einem oder mehreren der vorhergehenden Ansprüche, **dadurch gekennzeichnet, dass** das Befestigungsmittel mit einem Hohlraum versehen ist, in welchem das Mittel zur Erzeugung der Formänderung einführbar ist, und dass dem Mittel Energie zur Erzeugung der Formänderung zuführbar ist.

6. Linearbewegungsführung nach einem oder mehreren der vorhergehenden Ansprüche, **gekennzeichnet durch** einen Schlitten (2), welcher sich an der Führungsschiene (1, 100, 301, 401, 501, 601, 701) über Roll- oder Wälzelemente (7) abstützt, die in zumindest einem Umlauf (6a, 6b, 6c, 6d) angeordnet sind, bei der die Schiene eine im wesentlichen nutenförmige und parallel zur Längsbewegungsachse verlaufende Ausnehmung (20, 120, 420, 520, 720) zur Aufnahme des zumindest einem Befestigungsmittel (30, 130) aufweist, das zumindest eine Befestigungsmittel (30, 130) im Bereich einer Grundfläche (15, 115) der Schiene (1, 100, 301, 401, 501, 601, 701) in der Ausnehmung angeordnet ist und **durch** die Formänderung ein Formschluss zwischen dem Träger und dem Befestigungselement (30, 330, 430, 530, 630, 730) und/oder der Schiene und dem Befestigungselement zustande kommt.

7. Linearbewegungsführung nach einem oder mehreren der vorhergehenden Ansprüche, **dadurch gekennzeichnet, dass** sowohl zwischen der Schiene und dem Befestigungselement als auch zwischen dem Träger und dem Befestigungselement in Bezug auf eine Richtung senkrecht zur Längsbewegungsache eine formschlüssige Verbindung erzeugbar ist.

8. Linearbewegungsführung nach einem oder mehreren der vorhergehenden Ansprüche, **dadurch gekennzeichnet, dass** das zumindest eine Befestigungsmittel aufgrund der Querschnittsformänderung formschlüssig in der Ausnehmung des Trägers anordenbar ist.

9. Linearbewegungsführung nach einem oder mehreren der vorhergehenden Ansprüche, **dadurch gekennzeichnet, dass** die Querschnittsformänderung durch Veränderung der Temperatur des Befestigungsmittels bewirkt wird.

10. Linearbewegungsführung nach einem oder mehreren der vorhergehenden Ansprüche, **dadurch gekennzeichnet, dass** die Querschnittsformänderung durch eine Druckbeaufschlagung des Befestigungselements, insbesondere eine hydraulische Druckbeaufschlagung, bewirkt wird.

11. Linearbewegungsführung nach einem oder mehreren der vorhergehenden Ansprüche, **dadurch gekennzeichnet, dass** das Formänderungsmittel einen gegen das Befestigungselement anliegenden Schlauch enthält, der bei Druckbeaufschlagung eine Formänderung des Befestigungselementes bewirkt.

12. Linearbewegungsführung nach einem oder mehreren der vorhergehenden Ansprüche 1 bis 8, **dadurch gekennzeichnet, dass** das Befestigungselement und das Formänderungsmittel einstückig miteinander verbunden sind.

13. Linearbewegungsführung nach einem oder mehreren der vorhergehenden Ansprüche, **dadurch gekennzeichnet, dass** das Befestigungselement Spannpratzenleisten aufweist, welche aufgrund der Formänderung gegen Flächen der Schiene und gegen Flächen des Trägers in Anlage kommen.

14. Linearbewegungsführung nach einem oder mehreren der vorhergehenden Ansprüche, **dadurch gekennzeichnet, dass** das Befestigungsmittel mit der Schiene oder mit dem Träger stoffschlüssig verbunden ist.

15. Linearbewegungsführung nach einem oder mehreren der vorhergehenden Ansprüche, **dadurch gekennzeichnet, dass** das Befestigungsmittel bezüglich der Längsbewegungsachse asymmetrisch ausgebildet ist, wodurch mit dem Befestigungsmittel eine Kraftkomponente erzeugbar ist, mit welcher die Schiene gegen eine zur Grundfläche der Schiene orthogonal ausgerichteten seitlichen Anschlagfläche (344) des Trägers andrückbar ist.

16. Linearbewegungsführung nach einem oder mehreren der vorhergehenden Ansprüchen, **dadurch gekennzeichnet, dass** das Befestigungsmittel mit zumindest zwei Schenkeln versehen ist, welche aufgrund der Formänderung in Anlage gegen die Schiene und den Träger bringbar sind.

17. Linearbewegungsführung nach Anspruch 16, **dadurch gekennzeichnet, dass** das Befestigungselement im Querschnitt zumindest in etwa gemäss einem U-Profil ausgestaltet ist, dass die beiden Schenkel des U-Profils an ihren Aussenflächen zumindest abschnittsweise mit einem Eingriffsprofil versehen sind, dass zumindest ein Schenkel des U-Profils bei der Formänderung des Befestigungselementes auslenkbar ist, wodurch das Eingriffsprofil des Befestigungselementes in ein hierzu entsprechendes Eingriffsprofil von Seitenflächen der Ausnehmungen der Schiene und des Trägers eingreift.

18. Linearbewegungsführung nach Anspruch 17, **dadurch gekennzeichnet, dass** das Mittel zur Erzeugung einer Formänderung zwischen den beiden Schenkeln des Befestigungselementes angeordnet ist.

19. Linearbewegungsführung nach einem oder mehreren der vorhergehenden Ansprüche, **dadurch gekennzeichnet, dass** das Befestigungsmittel in der ersten Querschnittsform eine Breite aufweist, durch die es von oben in die Ausnehmung des Trägers oder der Schiene einsetzbar ist.

## Claims

1. A linear movement guide having a guide rail (1, 100, 301, 401, 501, 601, 701) and a cradle (2) that is supported by the guide rail and is movable along a longitudinal movement axis (8) of the guide, with the guide rail being provided to be disposed on a supporting structure (14, 114, 414, 514, 614, 714) by means of at least one securing means (130, 230), the securing means being mountable in recesses of the rail (1, 100, 301, 401, 501, 601, 701) and of the supporting structure,
**characterized in that**
the at least one securing means (130, 230) is provided with a securing element (30, 330, 340) and with a means for changing the shape of the securing element (30, 330, 430, 530, 630, 730), so that the securing element (30, 330, 430, 530, 630, 730) may be formed into various cross-sectional shapes, that the securing element, having a first cross-sectional shape and having been inserted into the recesses, is slidable relative to the supporting structure (14, 114, 414, 514, 614, 714) and/or the guide rail (1, 100, 301, 401, 501, 601, 701) and that the securing element, having a second cross-sectional shape, rests against the supporting structure and/or against the guide rail for providing a connection between the rail and the supporting structure.

2. The linear movement guide in accordance with claim 1, **characterized in that** the connection between the securing element (30, 330, 430, 530, 630, 730) and the supporting structure (14, 114, 414, 514, 614, 714) on the one side and/or between the securing element and the rail (1, 100, 301, 401, 501, 601, 701) on the other side is realized by surface pressure.

3. The linear movement guide in accordance with one or both of the afore mentioned claims 1 and 2, **characterized in that** the change of shape is substantially reversible.

4. The linear movement guide in accordance with one or several of the afore mentioned claims, **characterized in that** the securing means extends lengthwise substantially parallel to the longitudinal movement axis of the guide rail (1, 100, 301, 401, 501, 601, 701).

5. The linear movement guide in accordance with one or several of the afore mentioned claims, **characterized in that** the securing means is provided with a cavity into which the means for changing the shape is insertable and that energy may be supplied to said means for changing the shape.

6. The linear movement guide in accordance with one or several of the afore mentioned claims, **characterized by** a cradle (2) that is carried on the guide rail (1, 100, 301, 401, 501, 601, 701) by roller or rolling contact elements (7) that are arranged in at least one raceway (6a, 6b, 6c, 6d), with the rail comprising a groove-shaped recess (20, 120, 420, 520, 720) for accommodating the at least one securing means (30, 130) , said recess extending parallel to the longitudinal movement axis, with the at least one securing means (30, 130) being disposed in the recess in the region of a base area (15, 115) of the rail (1, 100, 301, 401, 501, 601, 701), and a form-positive fit between the supporting structure and the securing element (30, 330, 430, 530, 630, 730) and/or between the rail and the securing element being provided by changing the shape.

7. The linear movement guide in accordance with one or several of the afore mentioned claims, **characterized in that** a form-positive fit may be provided relative to the direction normal to the longitudinal movement axis both between the rail and the securing element and between the supporting structure and the securing element.

8. The linear movement guide in accordance with one or several of the afore mentioned claims, **characterized in that** the at least one securing means is adapted to be interlockingly disposed in the recess of the supporting structure by changing its cross-sectional shape.

9. The linear movement guide in accordance with one or several of the afore mentioned claims, **characterized in that** the cross-sectional shape is changed by varying the temperature of the securing means.

10. The linear movement guide in accordance with one or several of the afore mentioned claims, **characterized in that** the cross-sectional shape is changed by pressurizing, more specifically by hydraulically pressurizing, the securing element.

11. The linear movement guide in accordance with one or several of the afore mentioned claims, **characterized in that** the means for changing the shape contains a tube that rests against the securing element and that effects a change in the shape of the securing element when pressurized.

12. The linear movement guide in accordance with one or several of the afore mentioned claims 1 through 8, **characterized in that** the securing element and the means for changing the shape are integrally joined together.

13. The linear movement guide in accordance with one or several of the afore mentioned claims, **characterized in that** the securing element comprises bars of clamping claws that come to rest against surfaces of the rail and against surfaces of the supporting structure as a result of the shape having been changed.

14. The linear movement guide in accordance with one or several of the afore mentioned claims, **characterized in that** the securing means is connected to the rail or to the supporting structure by being integrally formed from a single piece of material.

15. The linear movement guide in accordance with one or several of the afore mentioned claims, **characterized in that** the securing means is configured asymmetrically relative to the longitudinal movement axis, so that the securing means permits to generate a component of force by means of which the rail may be pushed against a lateral abutment face (344) of the supporting structure that is oriented orthogonal to the base area of the rail.

16. The linear movement guide in accordance with one or several of the afore mentioned claims, **characterized in that** the securing means is provided with at least two legs that may be brought to rest against the rail and the supporting structure as a result of the shape having been changed.

17. The linear movement guide in accordance with claim 16, **characterized in that** the securing element is designed to have a cross-section that at least approximately corresponds to a U-profile, that, at their outer faces, the two legs of the U-profile are provided at least in portions with an engagement profile, that at least one leg of the U-profile is deviatable while the shape of the securing element is being changed so that the engagement profile of the securing element engages into a mating engagement profile of side faces of the recesses provided in the rail and in the supporting structure.

18. The linear movement guide in accordance with claim 17, **characterized in that** the means for changing the shape is disposed between the two legs of the securing element.

19. The linear movement guide in accordance with one or several of the afore mentioned claims, **characterized in that**, having the first cross-sectional shape, the securing means has a width that permits insertion thereof from the top into the recess provided in the supporting structure or in the rail.

## Revendications

1. Guide d'un mouvement linéaire avec un rail de guidage (1, 100, 301, 401, 501, 601, 701) et avec un chariot (2) supporté sur le rail de guidage et mobile le long d'un axe de mouvement longitudinal (8) du guide, dans lequel est prévu le rail de guidage destiné à être disposé sur une structure porteuse (14, 114, 414, 514, 614, 714) au moyen d'au moins un moyen de fixation (130, 230), le moyen de fixation étant adapté pour être monté dans des évidements ménagés dans le rail (1, 100, 301, 401, 501, 601, 701) et dans la structure porteuse,
**caractérisé en ce que**
l'au moins un moyen de fixation (130, 230) est muni d'un élément de fixation (30, 330, 340) et d'un moyen pour changer la forme de l'élément de fixation (30, 330, 340) de sorte qu'il est possible de donner à la section de l'élément de fixation (30, 330, 430, 530, 630, 730) différentes formes, que l'élément de fixation, introduit dans les évidements et présentant une section d'une première forme, est mobile en coulissement par rapport à la structure porteuse (14, 114, 414, 515, 614, 714) et/ou au rail de guidage (1, 100, 301, 401, 501, 601, 701) et que, pour établir une liaison entre le rail et la structure porteuse, l'élément de fixation est en appui sur la structure porteuse et/ou sur le rail de guidage lorsque sa section a pris une deuxième forme.

2. Guide d'un mouvement linéaire selon la revendication 1, **caractérisé en ce que** la liaison entre l'élément de fixation (30, 330, 430, 530, 630, 730) et la structure porteuse (14, 114, 414, 514, 614, 714) d'une part et/ou entre l'élément de fixation et le rail (1, 100, 301, 401, 501, 601, 701) d'autre part est réalisée par pression surfacique.

3. Guide d'un mouvement linéaire selon l'une quelconque des revendications précédentes 1 et 2 ou selon les deux, **caractérisé en ce que** le changement de forme est sensiblement réversible.

4. Guide d'un mouvement linéaire selon une ou plusieurs des revendications précédentes, **caractérisé en ce que**, dans le sens de la longueur, le moyen de fixation s'étend sensiblement parallèlement à l'axe de mouvement longitudinal du rail de guidage (1, 100, 301, 401, 501, 601, 701).

5. Guide d'un mouvement linéaire selon une ou plusieurs des revendications précédentes, **caractérisé en ce que** le moyen de fixation est muni d'une cavité dans laquelle est susceptible d'être introduit le moyen pour changer la forme et que ledit moyen est adapté pour être alimenté en énergie en vue de changer la forme.

6. Guide d'un mouvement linéaire selon une ou plusieurs des revendications précédentes, **caractérisé par** un chariot (2) qui est supporté sur le rail de guidage (1, 100, 301, 401, 501, 601, 701) par des éléments à rouleaux ou à roulement (7) disposés dans au moins un chemin de roulement (6a, 6b, 6c, 6d), où le rail comporte un évidement (20, 120, 420, 520, 720) sensiblement conformé en forme de gorge et s'étendant parallèlement à l'axe de mouvement longitudinal, ledit évidement étant destiné à recevoir l'au moins un moyen de fixation (30, 130), l'au moins un moyen de fixation (30, 130) est disposé dans l'évidement dans la région d'une surface de base (15, 115) du rail (1, 100, 301, 401, 501, 601, 701) et où, grâce au changement de forme, une liaison positive est établie entre la structure porteuse et l'élément de fixation (30, 330, 430, 530, 630, 730) et/ou entre le rail et l'élément de fixation.

7. Guide d'un mouvement linéaire selon une ou plusieurs des revendications précédentes, **caractérisé en ce qu'**une liaison positive est susceptible d'être réalisée perpendiculairement à l'axe de mouvement longitudinal entre le rail et l'élément de fixation tout comme entre la structure porteuse et l'élément de fixation.

8. Guide d'un mouvement linéaire selon une ou plusieurs des revendications précédentes, **caractérisé en ce que**, grâce au changement de forme de sa section, l'au moins un moyen de fixation est disposé dans l'évidement de la structure porteuse par coopération de formes.

9. Guide d'un mouvement linéaire selon une ou plusieurs des revendications précédentes, **caractérisé en ce que** le changement de forme de la section est obtenu en modifiant la température du moyen de fixation.

10. Guide d'un mouvement linéaire selon une ou plusieurs des revendications précédentes, **caractérisé en ce que** le changement de forme de la section est obtenu par la mise sous pression, notamment par la mise sous pression hydraulique, de l'élément de fixation.

11. Guide d'un mouvement linéaire selon une ou plusieurs des revendications précédentes, **caractérisé en ce que** le moyen de changement de forme contient un tuyau qui est en appui contre l'élément de fixation et qui, lorsqu'il est mis sous pression, change la forme de l'élément de fixation.

12. Guide d'un mouvement linéaire selon une ou plusieurs des revendications précédentes 1 à 8, **caractérisé en ce que** l'élément de fixation et le moyen pour changer la forme sont reliés de manière à ne constituer qu'une seule et même pièce.

13. Guide d'un mouvement linéaire selon une ou plusieurs des revendications précédentes, **caractérisé en ce que** l'élément de fixation comporte des baguettes sur lesquelles sont montées des griffes de serrage qui, grâce au changement de forme, viennent en appui contre des faces du rail et contre des faces de la structure porteuse.

14. Guide d'un mouvement linéaire selon une ou plusieurs des revendications précédentes, **caractérisé en ce que** le moyen de fixation est venu de matière avec le rail ou avec la structure porteuse.

15. Guide d'un mouvement linéaire selon une ou plusieurs des revendications précédentes, **caractérisé en ce que** le moyen de fixation est asymétrique par rapport à l'axe de mouvement longitudinal de sorte que l'élément de fixation permet de générer une composante de force grâce à laquelle le rail est apte à être plaqué contre une face latérale de butée (344) de la structure porteuse, ladite face latérale étant orientée orthogonalement à la surface de base du rail.

16. Guide d'un mouvement linéaire selon une ou plusieurs des revendications précédentes, **caractérisé en ce que** le moyen de fixation est muni d'au moins deux branches qui, grâce au changement de forme, sont aptes à venir en appui contre le rail et la structure porteuse.

17. Guide d'un mouvement linéaire selon la revendication 16, **caractérisé en ce que** l'élément de fixation a sa section conformée du moins approximativement en forme de profilé en U, que les deux branches du profilé en U sont munies sur leurs faces extérieures, du moins sur certains segments de celles-ci, d'un profil d'engagement, qu'au moins une branche du profilé en U est apte à être déviée lors du changement de forme de l'élément de fixation, permettant ainsi au profil d'engagement de l'élément de fixation de se mettre en prise avec un profil d'engagement complémentaire prévu sur les faces latérales des évidements ménagés dans le rail et dans la structure porteuse.

18. Guide d'un mouvement linéaire selon la revendication 17, **caractérisé en ce que** le moyen pour changer la forme est disposé entre les deux branches de l'élément de fixation.

19. Guide d'un mouvement linéaire selon une ou plusieurs des revendications précédentes, **caractérisé en ce que**, lorsque sa section présente sa première forme, le moyen de fixation a une largeur qui permet son insertion par le haut dans l'évidement ménagé dans la structure porteuse ou dans le rail.
